# EUROPÄISCHE PATENTANMELDUNG

(11) **EP 3 675 067 A1**
(43) Veröffentlichungstag der Anmeldung: **01.07.2020**
(21) Anmeldenummer: 20158415.8
(22) Anmeldetag: 13.08.2010
(51) Int. Cl.: G06T 19/00, G06F 3/147, G01C 23/00, G01C 21/00, G06T 15/20, G06F 3/01

(54) **VERFAHREN ZUR DARSTELLUNG VON VIRTUELLER INFORMATION IN EINER REALEN UMGEBUNG**

(30) Priorität: 18.08.2009 DE 102009037835
(62) Teilanmeldung aus: 10744693.2
(71) Anmelder: Apple Inc., Cupertino, CA 95014-2094 (US)
(72) Erfinder: MEIER, Peter, 80634 München (DE); ANGERMANN, Frank, 81829 München (DE)
(74) Vertreter: Lang, Johannes

(57) **Zusammenfassung**

Die Erfindung betrifft ein Verfahren zur ergonomischen Darstellung von virtueller Information in einer realen Umgebung, aufweisend die folgenden Schritte: Bereitstellen wenigstens einer Ansicht einer realen Umgebung und eines Systemaufbaus zum Einblenden von virtueller Information zur Überlagerung mit der realen Umgebung in wenigstens einem Teil der Ansicht, wobei der Systemaufbau wenigstens eine Darstellungsvorrichtung aufweist, Ermitteln einer Position und Orientierung wenigstens eines Teils des Systemaufbaus relativ zu wenigstens einem Bestandteil der realen Umgebung, Unterteilung von wenigstens einem Teil der Ansicht der realen Umgebung in mehrere Bereiche umfassend einen ersten Bereich und einen zweiten Bereich, wobei Objekte der realen Umgebung innerhalb des ersten Bereichs näher an dem Systemaufbau platziert sind als Objekte der realen Umgebung innerhalb des zweiten Bereichs, und Einblenden von wenigstens einer virtuellen Information auf die Darstellungsvorrichtung in wenigstens einen Teil der Ansicht der realen Umgebung unter Berücksichtigung der Position und Orientierung des wenigstens eines Teils des Systemaufbaus, wobei die virtuelle Information hinsichtlich der Art der Einblendung in die Ansicht der realen Umgebung in dem ersten Bereich anders dargestellt wird als in dem zweiten Bereich.

## Beschreibung

Die vorliegende Erfindung betrifft ein Verfahren zur Darstellung von virtueller Information in einer realen Umgebung. Das Verfahren eignet sich insbesondere zur ergonomischen Darstellung und Markierung von interessanten Punkten in der Welt mittels der Augmented Reality Technologie.

### Hintergrund der Erfindung

Augmented Reality (AR) ist eine Technologie, welche virtuelle Daten mit der Realität überlagert und somit die Zuordnung von Daten mit der Realität erleichtert. Nach dem Stand der Technik ist der Einsatz mobiler AR-Systeme bereits bekannt. In den vergangenen Jahren haben sich leistungsfähige mobile Geräte (z.B. Smartphones) als geeignet für den AR-Einsatz herausgestellt. Sie haben inzwischen vergleichsweise große Farbdisplays, eingebaute Kameras, gute Prozessoren und zusätzliche Sensoren, wie zum Beispiel Orientierungssensoren und GPS. Zusätzlich kann die Position des Gerätes über Funknetze angenähert werden.

In der Vergangenheit wurden verschiedene Projekte auf mobilen Geräten mit AR durchgeführt. Dabei wurden zunächst spezielle optische Markierungen eingesetzt, um die Position und Orientierung des Gerätes festzustellen. Bezüglich AR, welches auch weiträumig einsetzbar ist, auch large area AR genannt, wurden in Zusammenhang mit HMDs auch Hinweise zur sinnvollen Darstellung von Objekten veröffentlicht [2,4,5,6,7,8,9]. In letzter Zeit gibt es auch Ansätze, das GPS und die Orientierungssensorik modernerer Geräte zu nutzen ([1, 3, 10,15].

Gerade zu diesen Ansätzen mit Video-See-Through-AR auf kleinen, mobilen Geräten, wurden jedoch keine innovativen Verfahren zur Erhöhung der Benutzbarkeit bzw. Benutzerfreundlichkeit veröffentlicht.
[1] AR Wikltude. http://www.mobilizy.com/wikitude.php.
[2] B. Bell, S. Feiner, and T. H¨ollerer. View management for virtual and augmented reality. In Proceedings of the 14th ACM Symposium on User Interface Software and Technology, pages 101-110, 2001.
[3] Enkin. http://www.enkin.net.
[4] S. Feiner, B. Maclntyre, T. H"ollerer, and A. Webster. A touring machine: Prototyping 3d mobile augmented reality systems for exploring the urban environment. In Proceedings of the 1st International Symposium on Wearable Computers, pages 74-81, 1997.
[5] J. L. Gabbard, J. E. Swan II, D. Hix, S.-J. Kim, and G. Fitch. Active text drawing styles for outdoor augmented reality: A user-based study and design implications. In Proceedings of the IEEE Virtual Reality Conference, pages 35-42, 2007.
[6] T. H. H¨ollerer. User Interfaces for Mobile Augmented Reality Systems. PhD thesis, Graduate School of Arts and Sciences of Columbia University, 2004.
[7] S. Julier, Y. Baillot, D. Brown, and M. Lanzagorta. Information filtering for mobile augmented reality. IEEE Computer Graphics and Applications, 22(5);12-15, 2002.
[8] G. Reitmayr and D. Schmalstieg. Collaborative augmented reality for outdoor navigation and information browsing. In Proceedings of the Symposium Location Based Services and TeleCartography-Geowissenschaftliche Mitteilungen, pages 31-41, 2004.
[9] J. Rekimoto. The magnifying glass approach to augmented reality systems. In Proceedings of the International Conference on Artificial Reality and Tele-Existence and Conference on Virtual Reality Software and Technology, pages 123-132, 1995.
[10] Sekai Camera, http://www.tonchidot.com/product-info.html.
[11] J. Wither, S. DiVerdl, and T. H¨ollerer. Evaluating display types for ar selection and annotation. In IEEE International Symposium on Mixed and Augmented Reality, 2007.
[12] J. Wither and T. H¨ollerer. Pictorial depth cues for outdoor augmented reality. In Proceedings of the 9th IEEE International Symposium on Wearable Computers, pages 92-99, 2005.[13] From video image e.g. (Automatic Fog Detection and Estimation of Visibility Distance through use of an Onboard Camera) Zeitschrift Machine Vision and Applications Verlag Springer Berlin / Heidelberg ISSN 0932-8092 (Print) 1432-1769 (Online) Heft Volume 17, Number 1 / April 2006 Seiten 8-20
[14] Marko Heinrich, Bruce H. Thomas, Stefan Mueller, "ARWeather ," Mixed and Augmented Reality, IEEE / ACM International Symposium on, pp. 187-188, 2008 7th IEEE/ACM International Symposium on Mixed and Augmented Reality, 2008.
[15] layar.com

Der Anmelder ist zur Erkenntnis gelangt, dass bestimmte Systemeigenschaften für den Einsatz von large-area-AR erfüllt sein sollten: (1) Unkomplizierte, zügige Verwendung und direkter Zugriff auf relevante Informationen. (2) Die Genauigkeit der Zuordnung virtueller Informationen zur Realität ist wichtig. (3) Die Benutzeroberfläche sollte sauber und aufgeräumt sein.

Nachteil bisheriger Verfahren: (1) Häufig wird der sogenannte "Birdview" (eine Art Vogelperspektive) als Übersicht über Punkte in der Umgebung eingesetzt. Er wird beispielsweise eingesetzt, um dem Benutzer durch eingeblendete virtuelle Information anzuzeigen, etwa wo sich in der realen Welt interessante Punkte befinden. Er hat, bei begrenzter Bildschirmgröße, einen begrenzten Ausblick auf weit entfernte Elemente, bzw. die Auflösung wird zu klein und die Elemente sind nicht unterscheidbar/sichtbar. Er kompliziert die Oberfläche durch gleichzeitige Darstellung zweier Blickrichtungen. (2) Wird die Größe der Objekte nicht richtig skaliert, mindert dies die Entfernungswahrnehmung der Benutzer und damit die Zuordnungsfähigkeit. (3) Wird die Größe der Objekte skaliert, werden diese bei großen Entfernungen klein und unlesbar. Die Oberfläche erscheint unsauber und unaufgeräumt.

### Zusammenfassung der Erfindung

Ziel der Erfindung ist es, ein Verfahren zur Darstellung von virtueller Information in einer realen Umgebung anzugeben, mit welchem eine ergonomische Darstellung von interessanten Punkten in der realen Welt erzielbar ist, ohne das Blickfeld des Benutzers zu sehr einzuschränken und den Benutzer mit zu vielen Informationen zu überfordern.

Ein erster Aspekt der Erfindung betrifft ein Verfahren zum Darstellen von virtueller Information in einer realen Umgebung, aufweisend die folgenden Schritte:
Bereitstellen wenigstens einer Ansicht einer realen Umgebung und eines Systemaufbaus zum Einblenden von virtueller Information zur Überlagerung mit der realen Umgebung in wenigstens einem Teil der Ansicht, wobei der Systemaufbau wenigstens eine Darstellungsvorrichtung aufweist,
Ermitteln einer Position und Orientierung wenigstens eines Teils des Systemaufbaus relativ zu wenigstens einem Bestandteil der realen Umgebung,
Unterteilung von wenigstens einem Teil der Ansicht der realen Umgebung in mehrere Bereiche umfassend einen ersten Bereich und einen zweiten Bereich, wobei Objekte der realen Umgebung innerhalb des ersten Bereichs näher an dem Systemaufbau platziert sind als Objekte der realen Umgebung innerhalb des zweiten Bereichs,
Einblenden von wenigstens einer virtuellen Information auf die Darstellungsvorrichtung in wenigstens einen Teil der Ansicht der realen Umgebung unter Berücksichtigung der Position und Orientierung des wenigstens eines Teils des Systemaufbaus,
wobei die virtuelle Information hinsichtlich der Art der Einblendung in die Ansicht der realen Umgebung in dem ersten Bereich anders dargestellt wird als in dem zweiten Bereich.

Der wenigstens eine Teil des Systemaufbaus kann beispielsweise eine Kamera sein, deren Position und Orientierung (Pose) bestimmt wird, wobei die Kamera nicht fest mit der Darstellungsvorrichtung verbunden sein muss. In bestimmten Fällen ist für das Gesamtsystem überhaupt keine Kamera nötig, wenn zum Beispiel die Pose wenigstens eines Teils des Systemaufbaus nur über GPS und Orientierungssensoren bestimmt wird. Grundsätzlich ist die Posenbestimmung eines jeden Teils des Systemaufbaus geeignet, sofern Rückschlüsse über die Blickrichtung des Benutzers getroffen werden können.

Der erste Bereich kann beispielsweise ein Nahbereich sein, während der zweite Bereich ein Fernbereich sein kann. Es ist jedoch auch möglich, dass der erste Bereich einen Standortbereich repräsentiert, während der zweite Bereich einen Nahbereich darstellt. Eine Ausführungsform mit Nahbereich, Fernbereich und Standortbereich wird im folgenden in Bezug auf die Figuren noch näher erläutert.

Gemäß einem weiteren Aspekt der Erfindung, der vom obigen ersten erfindungsgemäßen Aspekt der Bereichsunterteilung der Ansicht auch unabhängig anwendbar ist, können bei der Einblendung von virtueller Information in eine Ansicht einer realen Umgebung Wetterdaten berücksichtigt werden, die z.B. über das Internet ("online") abgefragt werden, um den Realitätsgrad von eingeblendeter virtueller Information in Bezug auf die reale Umgebung zu erhöhen und damit die Zuordnung zu verbessern. Hier sind zur Verarbeitung unterschiedliche Komplexitätsgrade vorstellbar. So können z.B. auf Basis der Wetterlage feste Beleuchtungsmodelle oder Materialien vergeben werden (z.B. Texturen), welche der Wetterlage angepasst sind. Zusätzlich oder alternativ können abhängig von Wetterdaten (wie z.B. Bewölkung, Sonneneinstrahlung, etc) und/oder anderen Daten (wie z.B. Uhrzeit, Jahreszeit, etc.) Schattenwürfe oder Lichtverhältnisse berechnet werden.

In einer Ausführungsform repräsentiert die wenigstens eine virtuelle Information einen interessanten Punkt (allgemein auch als "Point of Interest", kurz POI, bezeichnet, insbesondere in Verbindung mit Navigationsgeräten) in Bezug auf die reale Umgebung.

Die Erfindung bietet den Vorteil, dass man eine ergonomische Darstellung von virtueller Information, insbesondere von interessanten Punkten, in der realen Welt erhält, ohne das Blickfeld des Benutzers zu sehr einzuschränken und den Benutzer mit zu vielen Informationen zu überfordern. Gleichzeitig können viele unterschiedliche virtuelle Informationen angezeigt werden, was jedoch durch die ergonomische Darstellung der virtuellen Information nicht zu einer Überforderung des Benutzers führt. Außerdem kann die Zuordnung von Informationen durch Berücksichtigung der menschlichen Wahrnehmungsmechanismen gestärkt werden.

Weitere vorteilhafte Ausgestaltungen der Erfindung sind den Unteransprüchen zu entnehmen.

### Kurze Beschreibung der Zeichnungen

Die Erfindung wird im folgenden anhand der in der Zeichnung dargestellten Figuren näher erläutert.
- Fig. 1: zeigt in einer Draufsicht eine schematische Anordnung von beispielhaften Systemaufbauten in Bezug auf eine reale Umgebung, die verwendbar sind, um ein Verfahren gemäß der Erfindung durchzuführen,
- Fig. 2: zeigt in einer schematischen Anordnung eine beispielhafte Aufteilung von interessanten Punkten (umgebende POIs) in unterschiedliche Radienbereiche,
- Fig. 3: zeigt in einer schematischen Anordnung einen möglichen Ansatz zur Berechung der Radien über POIs in Sektoren, wobei sich die Radien pro Sektor unterscheiden können,
- Fig. 4: zeigt mögliche Elemente einer beispielhaften Ansicht auf die reale Umgebung mit eingeblendeten virtuellen Informationen (hier: POI-Objekte) zur Bildung einer Ausführungsform einer Benutzeroberfläche gemäß Aspekten der Erfindung,
- Fig. 5: zeigt mögliche Elemente der Benutzeroberfläche gemäß Fig. 4, wenn sich der Bedienfokus im Standortbereich befindet,
- Fig. 6: zeigt eine beispielhafte Vorschau ("Preview") für eine virtuelle Information (hier: POI) im Standortbereich der Ansicht gemäß Fig. 4,
- Fig. 7: zeigt eine beispielhafte Möglichkeit, Oberflächenelemente aus der Ansicht gemäß Fig. 4 auszublenden, wenn diese nicht benötigt werden,
- Fig. 8-11: zeigen unterschiedliche Darstellungsmöglichkeiten für Ausführungsformen von virtuellen Informationen (hier: POI-Objekte),
- Fig. 12: zeigt in einem Ablaufdiagramm einen Überblick über den Gesamtablauf einer Ausführungsform eines Verfahrens gemäß der Erfindung,
- Fig. 13: zeigt anhand einer Ausführungsform einen möglichen Ablauf zur Berechnung des Radius 0 (vgl. Fig. 2) des Standortbereiches, wie beispielhaft in der Ansicht gemäß Fig. 4 gezeigt,
- Fig. 14: zeigt anhand einer Ausführungsform einen möglichen Ablauf zur Berechnung des Radius 1, wie beispielhaft in Fig. 2 dargestellt,
- Fig. 15: zeigt anhand einer Ausführungsform einen möglichen Ablauf zur Berechnung des Radius 2, wie beispielhaft in Fig. 2 dargestellt,
- Fig. 16: zeigt eine schematische Ansicht zur Verdeutlichung von beispielhaften Möglichkeiten zur Aggregation von virtuellen Informationen (hier: POI-Objekte),
- Fig. 17: zeigt einen beispielhaften, möglichen Ablauf zum Zuordnen von Schatten und Materialeffekten ("Shading") zu den virtuellen Informationen(hier: POI-Objekte),
- Fig. 18: zeigt beispielhafte mögliche Interaktionen mit virtuellen Informationen (hier: POI-Objekte).

### Beschreibung von Ausführungsformen der Erfindung

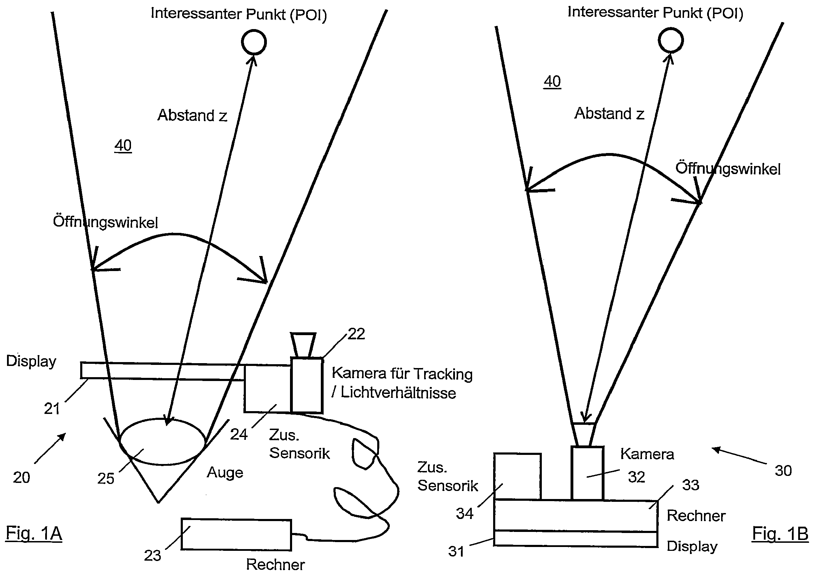

Figur 1 zeigt in einer Draufsicht eine schematische Anordnung von beispielhaften Systemaufbauten in Bezug auf eine reale Umgebung, die verwendbar sind, um ein Verfahren gemäß der Erfindung durchzuführen. Insbesondere zeigt Figur 1 verschiedene Möglichkeiten eines Systemaufbaus.

In der Darstellung der Fig. 1A trägt der Benutzer als Darstellungsvorrichtung ein kopf-getragenes Bildschirmsystem ("Head Mounted Display", kurz HMD) mit einem Display 21, welches Teil des Systemaufbaus 20 ist. Das Display 21 kann beispielsweise eine allgemein bekannte halbdurchlässige Datenbrille ("Optical See-Through-Display") sein, in die virtuelle Information, bereitgestellt von einem Rechner 23, eingeblendet werden kann. Der Benutzer sieht dann in einer Ansicht auf die reale Welt 40 durch die halbdurchlässige Datenbrille 21 Objekte der realen Welt angereichert mit eingeblendeter virtueller Information (wie etwa POI-Objekten, die mit der realen Welt in Beziehung stehen). Auf diese Art bildet der Systemaufbau 20 eine Ausführungsform eines allgemein bekannten Augmented Realtity (AR) Systems.

An dem Display 21 können zusätzliche Sensoren 24, wie Rotationssensoren und eine Kamera 22 für optisches Tracking, befestigt sein. Das Display 21 kann halbdurchlässig sein oder durch ein Kamerabild mit Bildern der Realität gespeist werden. Ist das Display 21 halbdurchlässig, ist eine Kalibrierung zwischen Auge 25 und Display 21 nötig. Hierzu sind im Stand der Technik verschiedene Verfahren dokumentiert und dem Fachmann bekannt. Vorteilhafterweise am Display 21 oder irgendwo am Körper des Benutzers oder in der Recheneinheit 23 können auch Positionssensoren verbaut sein, wie zum Beispiel GPS-Sensoren (GPS: Global Positioning System), um eine geographische Ortsbestimmung des Systemaufbaus 20 (z.B. nach Längen- und Breitengrad) in der realen Welt 40 zu ermöglichen.

In der Darstellung der Fig. 1B ist ein weiterer, beispielhafter Systemaufbau 30 gezeigt, der z.B. in modernen Mobiltelefonen (sog. "Smartphones") häufig zu finden ist. Die Darstellungsvorrichtung 31 (z.B. in Form eines Bildschirms bzw. Displays), Rechner 33, Sensoren 34 und Kamera 32 bilden eine Systemeinheit, die etwa in einem gemeinsamen Gehäuse eines Mobiltelefons untergebracht ist. Die Ansicht auf die reale Umgebung 40 wird durch das Display 31 bereitgestellt, welches ein Kamerabild der realen Umgebung 40 darstellt, das von der Kamera 32 aufgenommen wurde. Für Augmented Reality Anwendungen kann das Kamerabild auf dem Display 31 dargestellt und mit zusätzlichen virtuellen Informationen (wie etwa POI-Objekten, die mit der realen Welt in Beziehung stehen) angereichert werden. Auf diese Art bildet der Systemaufbau 30 eine weitere Ausführungsform eines allgemein bekannten Augmented Realtity (AR) Systems.

Grundsätzlich kann diese Erfindung für alle Ausprägungen von AR sinnvoll eingesetzt werden. Zum Beispiel spielt es keine Rolle, ob die Darstellung im sogenannten Optical-See-Through-Verfahren mit halbdurchlässigem HMD oder im Video-See-Through-Verfahren mit Kamera und Bildschirm durchgeführt wird. Wenn im Folgenden von der Kamera gesprochen wird, kann dies eine Kamera sein oder das optische System, welches sich aus der Kombination von Auge und Seethrough-Display (vgl. Display 21 der Fig. 1A) ergibt. Beide weisen für das Einblenden von virtueller Information relevante Kameraeigenschaften, wie Öffnungswinkel und Bildhauptpunkt, auf.

Grundsätzlich kann die Erfindung auch im Zusammenhang mit stereoskopischen Displays eingesetzt werden, wobei vorteilhafterweise beim Video-See-Through-Ansatz zwei Kameras jeweils einen Videostrom für ein Auge aufnehmen. Auf jeden Fall können die virtuellen 3D-Informationen für jedes Auge individuell gerechnet werden.

Die Abarbeitung der unterschiedlichen, im folgenden beschriebenen Teilschritte kann grundsätzlich auf verschiedene Rechner über Netzwerk verteilt werden. Es ist also eine Client/Server- Architektur oder rein Client-basierte Lösung möglich. Zum Beispiel könnte der Client ein Bild an einen Server senden, welcher auf Basis des Bildes Aussagen zur 3D-Position und 3D-Orientierung des Systemaufbaus (vgl. Fig. 1) oder eines Teils davon in Relation zur realen Welt (im weiteren Verlauf Pose genannt) und zur Sichtweite dem Client zur Verfügung stellt. Desweiteren kann der Client oder der Server auch mehrere Recheneinheiten, wie mehrere CPUs oder spezialisierte Hardwarekomponenten, wie allgemein bekannte FPGAs, ASICs, GPUs oder DSPs beinhalten. Mehrere Clients können auch untereinander Informationen austauschen, welche zum Beispiel bezüglich der Sichtweite an diesem Ort generiert werden oder falls ein Client einen POI erzeugt. Dieser Informationsaustausch kann über einen Server stattfinden, es wären aber auch direkte Verbindungen über Bluetooth oder WLAN denkbar.

Um AR realisieren zu können, wird die Pose (Position und Orientierung) der Kamera im Raum benötigt. Dies kann auf unterschiedlichste Weise realisiert werden. Man kann z.B. nur mit GPS und einem Orientierungssensor mit elektronischem Kompass (wie zum Beispiel in manchen moderneren Mobiltelefonen verbaut) die Pose in der Welt ermitteln. Allerdings ist die Unsicherheit der Pose dann sehr hoch. Daher können auch andere Verfahren, wie zum Beispiel optische Initialisierung und Tracking oder die Kombination optischer Verfahren mit GPS und Orientierungssensoren eingesetzt werden. Es kann auch WLAN-Ortung eingesetzt werden oder RFIDs oder optische Marker können die Lokalisierung unterstützen. Auch hier ist, wie schon erwähnt, ein Client-Server-basierter Ansatz möglich. Insbesondere kann der Client ortsspezifische Informationen, die er für optisches Tracking benötigt, vom Server anfordern. Dies können zum Beispiel Referenzbilder der Umgebung mit Poseinformationen und Tiefeninformationen sein.

Die Erfindung kann die Informationsdarstellung für den Client verbessern. Sie kann aber auch in einem Remote-Szenario (Fernansicht-Szenario) eingesetzt werden. Hier sieht zum Beispiel ein Wartungsexperte in einem Kontrollraum das per Datennetz übertragene Bild des Clients und die entsprechend aufbereiteten Informationen auf seinem Bildschirm. Er könnte dann dem Client Anweisungen geben oder nur beobachten. In einem ähnlichen Szenario ist denkbar, dass eine Person aufgenommenes Bild- oder Videomaterial mit erfindungsgemäß dargestellten interaktiven Zusatzinformationen betrachtet und wenn möglich ähnlich der internetbasierten Anwendung "Google Streetview" durch das Material navigieren kann.

Desweiteren kann die Erfindung auch in Fahrzeugen, Luftfahrzeugen oder Schiffen als Monitor, HMD oder mittels eines Head-Up-Displays verbaut oder mitgeführt werden.

Grundsätzlich kann ein interessanter Punkt ("Point of Interest", POI) für unterschiedlichste Informationsformen erstellt werden. Es folgen Beispiele. Es können Bilder von Orten mit GPS-Informationen dargestellt werden. Es können Informationen aus dem Internet automatisch extrahiert werden. Dies können zum Beispiel Firmen- oder Restaurant-Websites mit Adressen sein oder Seiten auf denen Bewertungen vorgenommen werden. Es können Nutzer Texte, Bilder oder 3D-Objekte an Orten hinterlegen und anderen zugänglich machen. Es können Informationsseiten, wie zum Beispiel Wikipedia nach Geoinformationen durchsucht werden und die Seiten als POI zugänglich gemacht werden. Es können POIs automatisch aus dem Such- oder Browseverhalten der Nutzer mobiler Geräte erzeugt werden. Es können andere interessante Orte, wie U-Bahnen oder Busstationen, Krankenhäuser, Polizeistationen, Ärzte, Immobilienanzeigen oder Fitnessclubs dargestellt werden.

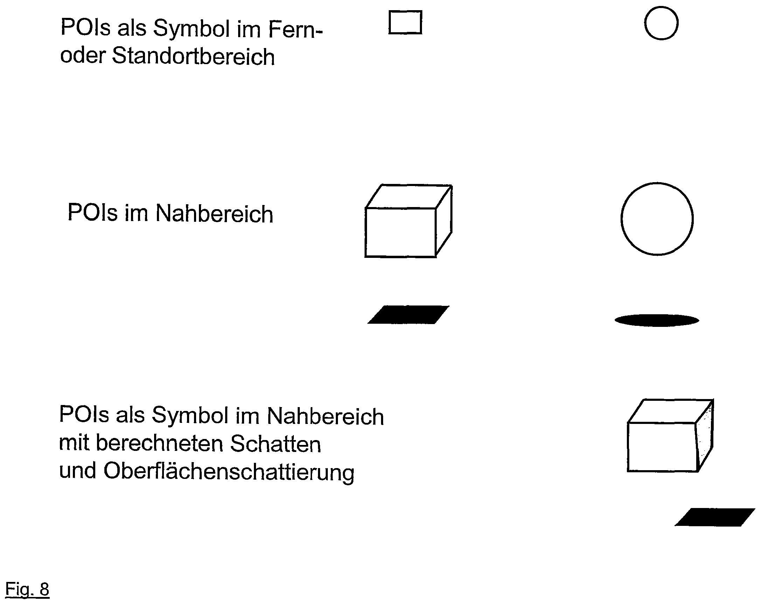

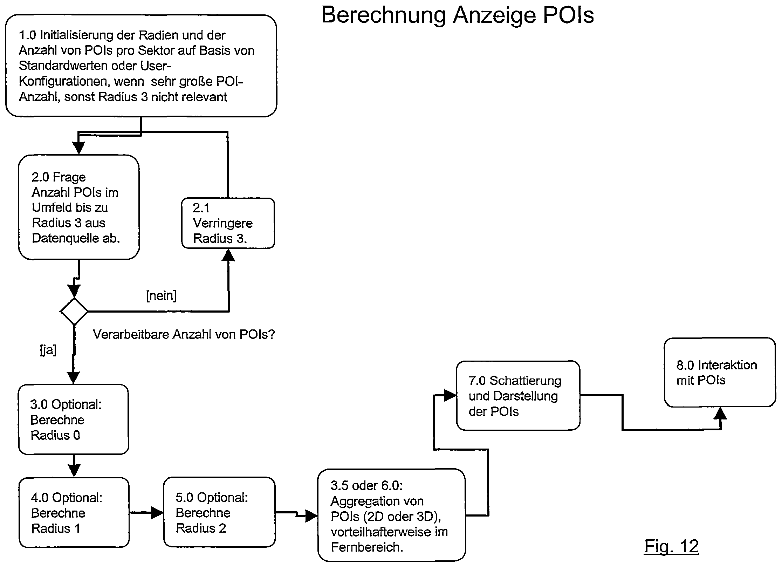

Im folgenden werden Aspekte und Ausführungsformen der Erfindung anhand der Ablaufdiagramme, die ab Figur 12 dargestellt sind, in Verbindung mit den übrigen Figuren 1 bis 11 näher erläutert.

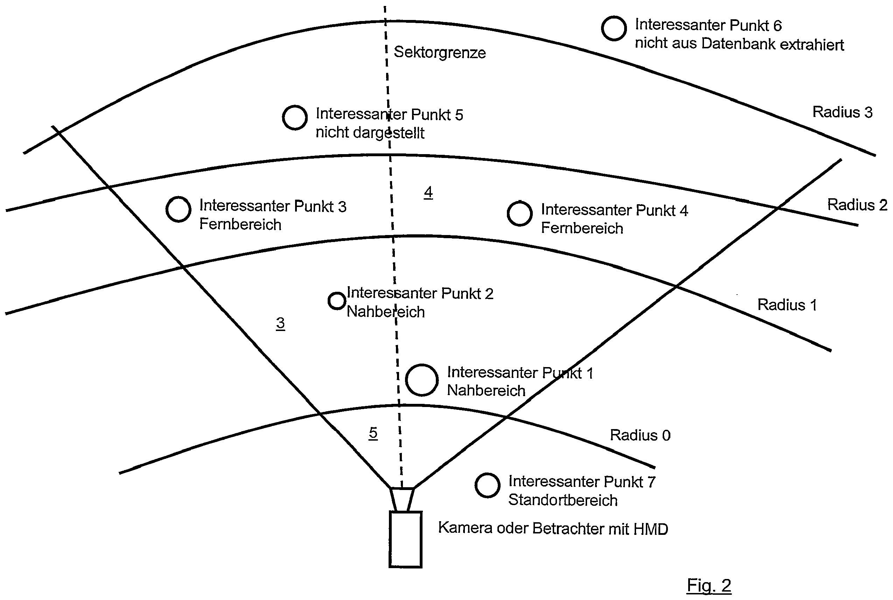

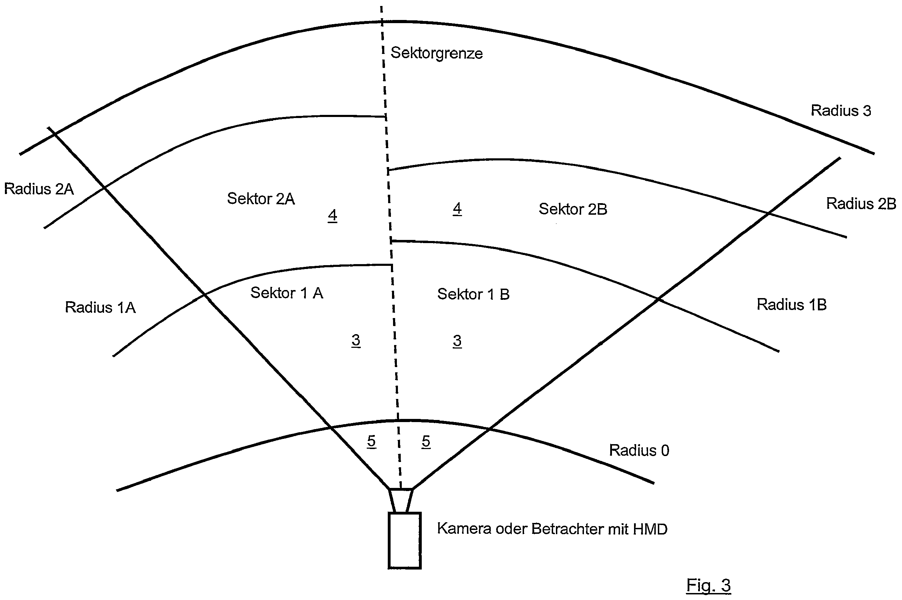

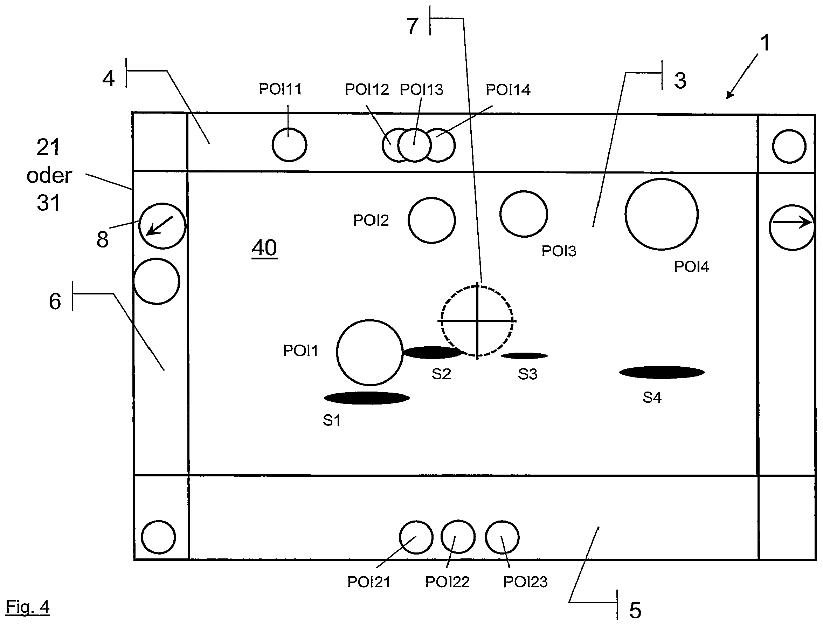

Hierbei zeigt Fig. 2 in einer schematischen Anordnung eine beispielhafte Aufteilung von interessanten Punkten (umgebende POIs) in unterschiedliche Radienbereiche, Fig. 3 zeigt in einer schematischen Anordnung einen möglichen Ansatz zur Berechung der Radien über POIs in Sektoren, wobei sich die Radien pro Sektor unterscheiden können, und Fig. 4 zeigt mögliche Elemente einer beispielhaften Ansicht auf die reale Umgebung mit eingeblendeten virtuellen Informationen (hier: POI-Objekte) zur Bildung einer Ausführungsform einer Benutzeroberfläche gemäß Aspekten der Erfindung.

Wie in Fig. 4 näher gezeigt, wird wenigstens ein Teil der Ansicht 1 auf die reale Umgebung (welche die Ansicht durch ein halbdurchlässiges HMD 21 oder auf einem Bildschirm-HMD 21 gemäß Fig. 1A, oder eine Bildschirmansicht eines Kamerabildes auf dem Display 31 gemäß Fig. 1B sein kann) in mehrere Bereiche unterteilt. Diese umfassen in dieser Ausführungsform einen ersten Bereich 3, der in dieser Ausführungsform einen Nahbereich 3 darstellt, einen zweiten Bereich 4, der in dieser Ausführungsform einen Fernbereich 4 darstellt, und einen dritten Bereich 5, der in dieser Ausführungsform einen Standort-Bereich 5 darstellt. Hierbei sind Objekte der realen Umgebung 40 innerhalb des Nahbereichs 3 näher an dem Systemaufbau 20 bzw. 30 platziert als Objekte der realen Umgebung innerhalb des Fernbereichs 4. Im Standort-Bereich 5 wiederum sind Objekte der realen Umgebung 40 näher an dem Systemaufbau 20 bzw. 30 platziert als Objekte der realen Umgebung innerhalb des Nahbereichs 3.

In die Ansicht 1 gemäß Fig. 4 wird wenigstens eine virtuelle Information eingeblendet (im vorliegenden Ausführungsbeispiel werden mehrere virtuelle Informationen POI1-POI4, POI11-POI14 und POI21-POI23 eingeblendet). Diese repräsentieren in dieser Ausführungsform interessante Punkte (POIs) in Relation zur Realität, die in der Ansicht 1 sichtbar ist. Beispielsweise wird zu einem in der Ansicht 1 sichtbaren Gebäude (in Fig. 4 nicht dargestellt) eine virtuelle Information POI1 eingeblendet, die auf dieses Gebäude hinweist bzw. optisch mit diesem assoziiert ist und ggf. ermöglicht, weitere Informationen zum Gebäude abzurufen. Hierbei wird die Information POI1 auf die Darstellungsvorrichtung 21 bzw. 31 in wenigstens einen Teil der Ansicht 1 der realen Umgebung unter Berücksichtigung der Position und Orientierung des entsprechenden Systemaufbaus 20 bzw. 30 bzw. eines Teils davon eingeblendet. Wie im folgenden noch näher erläutert, wird die eingeblendete virtuelle Information hinsichtlich der Art der Einblendung in die Ansicht 1 in dem Nahbereich 3 anders dargestellt als in dem Fernbereich 4. Mit anderen Worten, wird die gleiche virtuelle Information (etwa POI1) in dem Nahbereich 3, z.B. wenn sie mit einem realen Objekt in dem Nahbereich 3 assoziiert ist, anders dargestellt als bei Einblendung in dem Fernbereich 4, z.B. wenn sie mit einem realen Objekt in dem Fernbereich 4 assoziiert ist (ein POI ist hier gleichzeitig nur in einem Bereich präsent).

Wie in den Figuren 2 und 3 veranschaulicht, ist der Nahbereich 3 von dem Fernbereich 4 und dem Standort-Bereich 5 durch eine jeweilige Begrenzung getrennt, die im vorliegenden Ausführungsbeispiel jeweils einen Radius (Radius 0 bis Radius 3) in Richtung eines Blickwinkels der Darstellungsvorrichtung aufweisen (Fig. 2 zeigt darüber hinaus noch weitere Begrenzungen bzw. Radien, wie im folgenden noch näher erläutert). Die Festlegung und Berechung der Radien gemäß Figuren 2 und 3 wird im weiteren Verlauf noch näher beschrieben. Die Begrenzungen haben kein festgelegte Form, sind vorzugsweise jedoch rotationssymmetrisch in Bezug auf die Kamera bzw. den Betrachter. Auch brauchen die Begrenzungen nicht kreisrund zu sein, sondern können z.B. auch elliptische oder andere Formen aufweisen.

### ÜBERSICHT

Figur 12 zeigt in einem Ablaufdiagramm einen Überblick über den Ablauf einer Ausführungsform eines Verfahrens gemäß der Erfindung in Verbindung mit den Figuren 1-11. In einem ersten Schritt 1.0 wird das System initialisiert bzw., wenn bereits ein Durchlauf stattgefunden hat, können alte Werte optional behalten werden. In einem nächsten Schritt werden Daten, falls noch nicht vorhanden oder falls sich die Situation geändert hat, geladen. Die Datenquelle kann dabei auf einem oder mehreren Servern liegen oder lokal auf dem Gerät gespeichert sein oder als Information in die Umwelt eincodiert sein (z.B. über RFID- oder QR-Codes). Falls eine sehr große Anzahl von POIs in der Datenquelle hinterlegt sind, kann die Anzahl über die Position und die Festlegung eines Radius 3 eingeschränkt werden. Eine solche Funktionalität bieten zum Beispiel moderne Datenbanksysteme mit räumlichen Merkmalen oder Eigenschaften ("spatial features"). Grundsätzlich können POIs auch mit bereits in diesem Schritt durch Filter herausgefiltert werden, die der Benutzer selbst definiert. Zum Beispiel nur Gastronomie oder keine Gastronomie. POIs, welche entsprechende Informationen tragen, werden dann aussortiert. Dem Fachmann wird an dieser Stelle klar, dass für einen POI eine ensprechende Datenstruktur hinterlegt sein kann, welche zum Beispiel seine Position, seine 2D- oder 3D-Gestalt, ein Bild und/oder weitere Meta-Informationen, wie zum Beispiel die Kategorie, enthalten kann.

In den Schritten 3.0 - 6.0 werden die POIs dann erfindungsgemäß organisiert. Danach können sie optisch aufbereitet und angezeigt werden. Danach ist eine Interaktion mit den dargestellten POIs möglich, wie anhand eines Beispiels noch näher erläutert.

### AUFTEILUNG IN BEREICHE

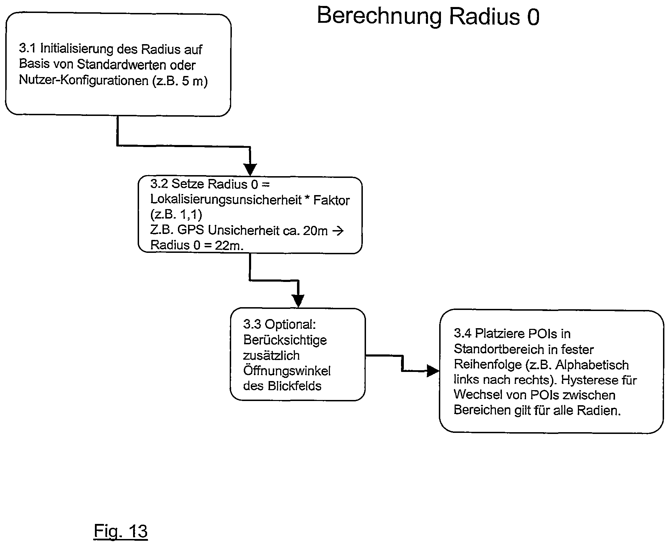

Im Folgenden werden die Schritte 3.0 - 6.0 der Fig. 12 in Verbindung mit den nachfolgenden Figuren 13-18 und den Figuren 1 bis 11 genauer beschrieben. Hierbei beziehen sich die Figuren 13-18 auf mögliche Unterschritte von den in Fig. 12 gezeigten allgemeinen Verfahrensschritten. Grundsätzlich können diese Schritte pro Durchlauf oder im Hintergrund, in bestimmten Abständen, abhängig von der Leistungsfähigkeit des Systems durchgeführt werden. Ein grundlegender Aspekt der Erfindung ist, dass eingeblendete virtuelle Informationen (hier: POIs) in fest konfigurierten oder automatisch berechneten, unterschiedlichen Bereichen einer Ansicht auf die reale Welt eingeordnet werden.

Figur 2 zeigt eine Ansicht auf ein mögliches Szenario aus der Vogelperspektive. Unterschiedliche POIs sind im Umfeld der Kamera räumlich angeordnet. Würden alle diese POIs einfach nur dargestellt, würde der Bildschirm schnell mit sehr vielen Objekten überfüllt. Daher erfolgt eine Aufteilung in unterschiedliche Bereiche. Der Standortbereich 5 wird durch Radius 0 eingeschränkt. Zu den Radien ist zu sagen, dass sie nicht über alle Winkel konstant sein müssen, sondern sich abhängig vom Winkel verändern können (vgl. Fig. 3). Der Standortbereich 5 zeigt Objekte, die sich in unmittelbarer Nähe befinden, so dass es für den Nutzer schwierig ist, sie mit dem Gerät wiederzufinden. Die Auffindbarkeit ist insbesondere Abhängig von der Genauigkeit der ermittelbaren Pose. Entsprechend kann der Radius 0 vorteilhafterweise abhängig von der (Unsicherheit der) Posenermittlung größer oder kleiner gesetzt werden (Figur 13).

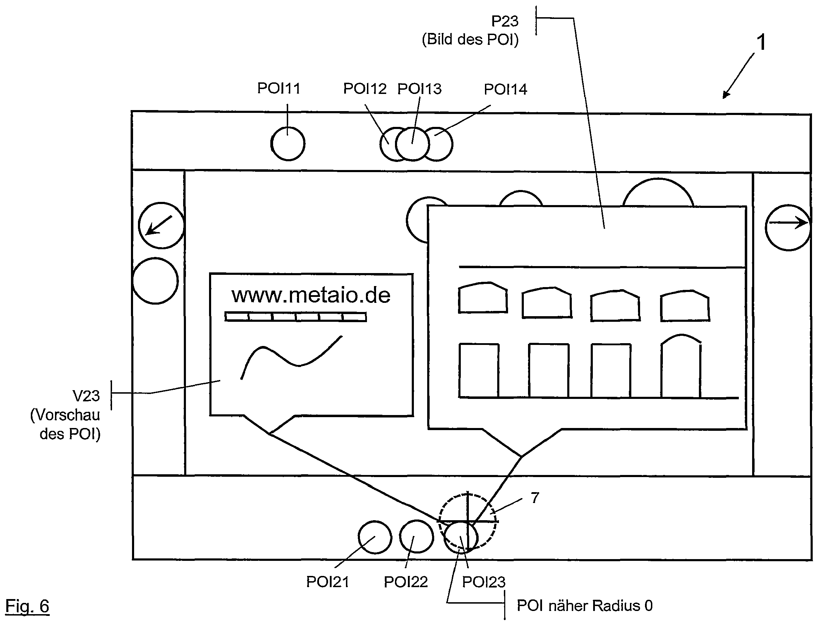

Fig. 4 zeigt mögliche Elemente einer beispielhaften Ansicht auf die reale Umgebung mit eingeblendeten virtuellen Informationen (hier: POI-Objekte) zur Bildung einer Ausführungsform einer Benutzeroberfläche gemäß Aspekten der Erfindung, Fig. 4 zeigt hierbei eine vorteilhafte Aufteilung der Benutzeroberfläche. Dabei werden POIs im Standortbereich 5 fest im unteren Bereich der Ansicht 1 angeordnet und sind zum Beispiel per Mausklick oder Berührung mittels eines Touchscreens auswählbar. Fig. 6 zeigt eine mögliche Anzeige in Folge der Aktivierung eines beispielhaften POI23. Falls vorhanden, kann ein Bild P23 des genauen Ortes des POI23 zur Orientierung angezeigt werden. Falls vorhanden, kann zusätzlich eine Vorschau V23 ("Preview") der hinterlegten Information dargestellt werden POI-Objekte, die sich außerhalb des Standortbereichs 5 befinden, aber in Sichtnähe liegen, werden im Nahbereich 3 angeordnet. In diesem Bereich wird die korrekte Zuordnung von virtuellen Informationen zur Realität als besonders wichtig empfunden. So kann es für die persönliche Planung des Pfades relevant sein, ob ein POI-Objekt vor oder hinter einer Straßenkreuzung liegt. Eingegrenzt wird der Nahbereich 3 durch die Radien 0 und 1 (Fig. 2).

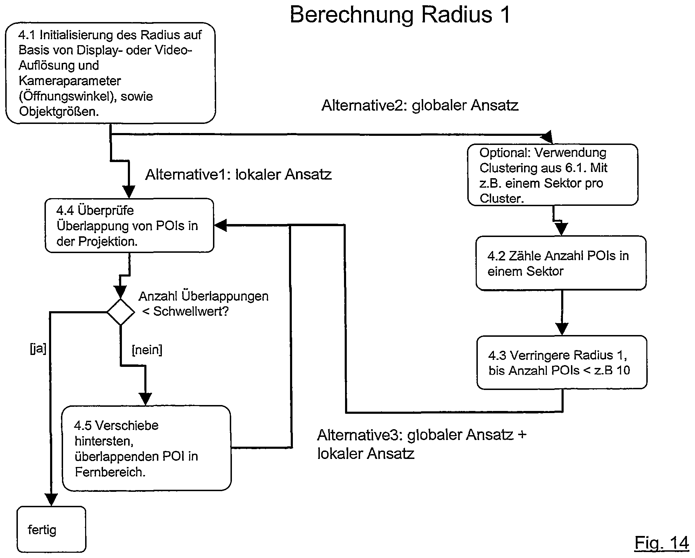

Figur 14 zeigt eine Möglichkeit zur Berechnung des Radius 1. Einerseits spielt dabei die sinnvolle Sichtbarkeit von POI-Objekten eine Rolle. Wäre die Darstellung eines POI nur noch 2 mm groß (Beispielwert), würde sie wenig Nutzen bringen, sondern nur für Unordnung im Display sorgen. Für die Berechnung in Schritt 4.1 geht daher die Auflösung des Displays, die Größe des POI (die Darstellung z.B. eines Dinosauriers erlaubt einen größeren Radius 1, als die Darstellung einer Im großen Kugel), und der Öffnungswinkel der Kamera ein. In den weiteren Schritten kann der Radius 1 weiter angepasst werden, falls zu viele POIs den Bildschirm füllen (als globaler Ansatz bezeichnet). Die Berechnung kann sich auf den gesamten Öffnungswinkel der Kamera oder sogar einen größeren Bereich beziehen. Es ist auch möglich, kleinere Sektoren individuell einzustellen.

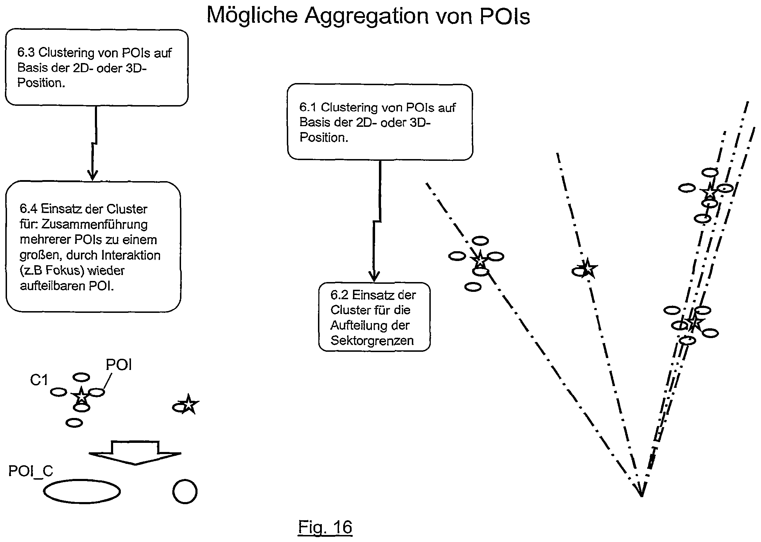

Die Sektoren können z.B. fest sein oder auch auf Basis von Clustern gebildet werden, wobei Cluster Sektoren einteilen helfen (vgl. Schritt 6.2 in Fig. 16). Ein beispielhaftes Verfahren könnte wie folgt durchgeführt werden: Pro Cluster wird der Schwerpunkt berechnet. Durch diesen wird eine Gerade gezogen. Nun werden Geraden, die einen geringen Winkel zueinander haben, zusammengefasst. Jede resultierende Gerade wird auf ganzzahlige Winkel ausgerichtet und ihnen wird ein Sektor zugeordnet. Die Größe der Sektoren wird dann gerundet und iterativ in ganzzahligen Winkelschritten vergrößert, bis sie mit einem Nachbarsektor in Berührung kommen. Sind die Sektoren durch Cluster oder durch feste Einstellungen festgelegt, wird in Schritt 4.2 die Anzahl von POIs eines Sektors gezählt. Ist diese über einem bestimmten konfigurierbaren Grenzwert, wird der Radius solange verringert, bis der Grenzwert unterschritten wird (Schritt 4.3).

Alternativ können auch individuelle POIs ohne Anpassung des Radius in den Fernbereich 4 verschoben werden (als lokaler Ansatz bezeichnet), falls sich POIs in der Darstellung überlappen. Dazu werden in Schritt 4.4 die 2D-Position und Ausdehnung der POIs, entsprechend der Rendering-Pipeline, berechnet. Als Rendering-Pipeline versteht der Fachmann die Projektion von Objekten im 3D-Raum auf ein geringer-dimensionales Display. Im Nahbereich geschieht dies zum Beispiel, abhängig von Position, Orientierung, Öffnungswinkel der Kamera und Auflösung des 2D-Displaybereichs, der dem Nahbereich zur Verfügung steht. Für den Fernbereich projiziert die Rendering-Pipeline auf eine Linie. Dies kann zum Beispiel mittels einer Standard 3D-2D Projektion erfolgen, bei der die Objekte für den Renderer als sehr weit entfernt mitgeteilt werden, um die Position der Objekte auf dem möglicherweise rotierten Display in ihrem Fluchtpunkt festzustellen. Überlappen sie sich, wird der hintere POI für den Fernbereich 4 gekennzeichnet (Schritt 4.5). Diese Kennzeichnung kann für einen Darstellungsdurchlauf (Schritt 1.0 - 9.0 der Figur 12) erhalten bleiben oder länger erhalten bleiben (zum Beispiel 3 Sekunden oder 5 Darstellungsdurchläufe). Das System kann solange die Schritte 4.4 und 4.5 durchführen, bis keine Überlappungen mehr vorkommen oder einen bestimmten Wert unterschreiten. Es kann auch eine Toleranz geben, wann eine Überlappung als solche gilt (z.B. mehr als 10% der Summe der Fläche beider Objekte als Überschneidung). Vorteilhafterweise kann der globale auch mit dem lokalen Ansatz kombiniert werden.

Auch wenn in den Zeichnungen, aus Gründen der Darstellbarkeit, die Sektoren und POIs aus der Vogelperspektive dargestellt werden, sind alle diese Verfahren auch wahlweise für den 3D-Fall anwendbar.

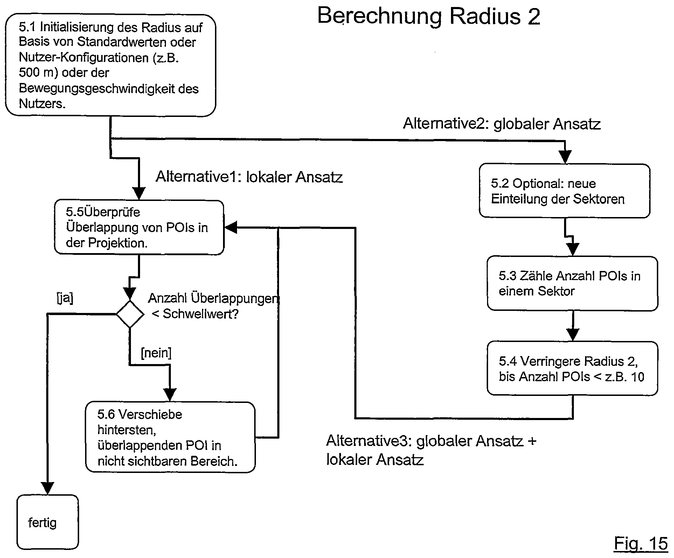

Der Fernbereich 4 enthält POIs, welche aus dem Nahbereich verdrängt wurden oder welche außerhalb des Radius 1 in dem Sektor liegen. Aber selbst hier ist es nicht unbedingt sinnvoll, alle existierenden POI-Objekte darzustellen. Daher kann vorteilhafterweise ein Radius 2, ähnlich wie Radius 1, berechnet werden, wie Figur 15 zeigt. Da Radius 2 insbesondere POI-Objekte noch anzeigen soll, die in der Reichweite des Nutzers liegen, kann vorteilhafterweise die aktuelle Geschwindigkeit oder die Durchschnittsgeschwindigkeit des Benutzers oder die Entfernung, welche der Benutzer mit öffentlichen Verkehrsmitteln, Fahrzeug oder Fahrrad oder ähnlichem in einer bestimmten Zeit erreichen kann, zur Berechnung von Radius 2 herangezogen werden. Die Möglichkeit, abhängig von diesen Faktoren zu berechnen, welche Objekte überhaupt mittels AR dargestellt werden können, kann auch unabhängig von den anderen Ansprüchen der Erfindung eingesetzt werden.

In einer beispielhaften Ausprägung der Erfindung kann man einzelne POIs auch von einem Bereich in einen anderen Ziehen (z.B. über einen Touchscreen) und so zum Beispiel für die Darstellung im Nahbereich markieren. Das POI-Objekt wird dann dauerhaft z.B. im Nahbereich 3 angezeigt.

Es ist zur manuellen Einstellung der Radien auch denkbar, diese dem Nutzer lagegerecht der Realität überlagert anzuzeigen. Der Nutzer kann dann mittels Touchscreen die Radien manuell verändern.

### DARSTELLUNG DER OBJEKTE

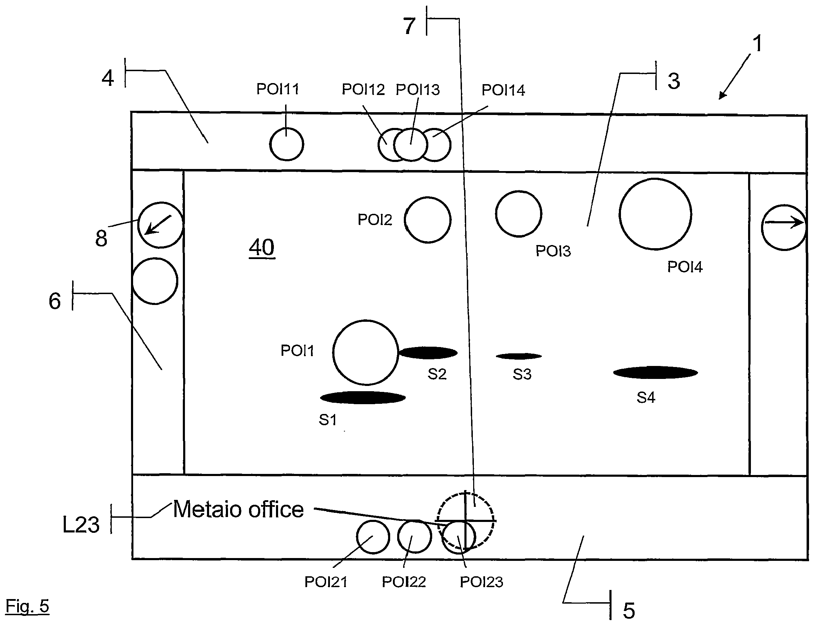

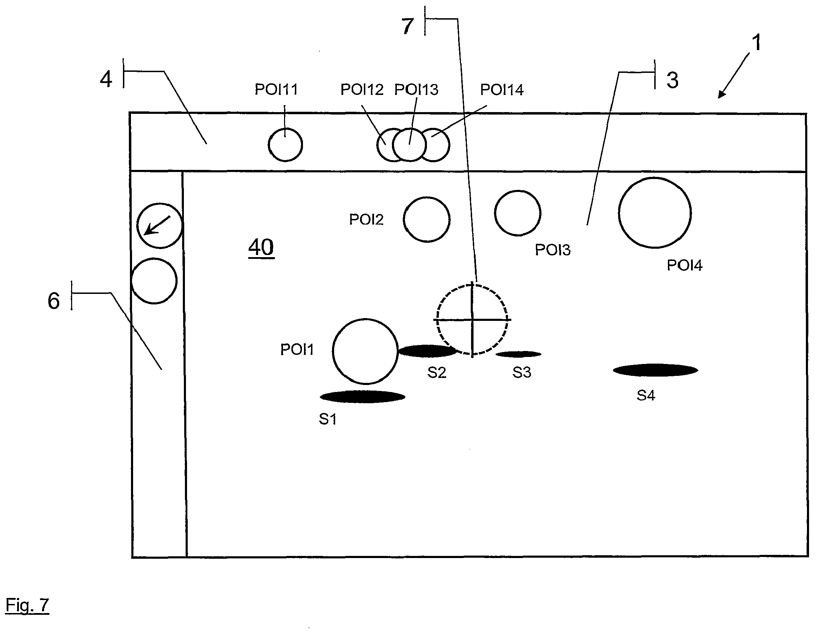

Figur 4 zeigt eine mögliche beispielhafte Darstellungsform für POIs in unterschiedlichen Bereichen. Dabei werden POIs im Standortbereich 5 unten in einheitlicher Größe unbeweglich und zunächst unabhängig von der Blickrichtung dargestellt. POI-Objekte im Nahbereich 3 werden entsprechend der Pose, der Kameraparameter und der Modelleigenschaften dreidimensional und perspektivisch korrekt der Umgebung 40 überlagert. POI-Objekte im Fernbereich 4 werden vorteilhafterweise in einheitlicher Größe dargestellt und bewegen sich vorteilhafterweise entsprechend der Orientierung des Gerätes (insbesondere der Darstellungsvorrichtung) so mit, dass eine vertikale Linie nach unten den entsprechenden zugeordneten realen Ort treffen würde. Vorteilhafterweise können am rechten und linken Rand 6 noch Symbole angezeigt werden, die auf POI-Objekte außerhalb des Öffnungswinkels der Kamera hinweisen. Ein Pfeil 8 kann dabei einen Richtungshinweis geben, so dass, wenn man das Gerät entlang der Pfeilrichtung um den Betrachter bewegt, das POI-Objekt in den Sichtbereich gelangen würde. Diese Ränder 6 kann es jeweils für jeden Bereich geben (Fig. 4) oder z.B. nur für den Nahbereich 3 (Fig. 5). Nahbereich 3, Fernbereich 4 und/oder Standortbereich 5 können optional ausgeblendet werden, insbesondere wenn keine virtuelle Information darin dargestellt wird. Dies kann auch automatisch erfolgen, wenn sich kein POI in diesen Bereichen befindet (Fig. 7).

Grundsätzlich kann ein Point of Interest (POI) durch ein Symbol, ein Bild, ein 3D-Objekt oder Ähnliches repräsentiert sein. Zur Darstellung ist der Einsatz einer 3D-Rendering-Technologie (wie die bekannten Verfahren OpenGL oder DirectX) mit 3D-Objekten, dem Rendering sogenannter Billboards (2D-Objekte, die immer dem Betrachter zugewandt sind) oder von sogenannten 2D-Overlays mit 2D-Rendering-Techniken möglich, deren Projektion eigenständig berechnet wird. Die Darstellungsweise kann sich nach der Kategorie der POIs richten (z.B. eine Weltkugel für die Repräsentation einer Website) oder durch den Nutzer festgelegt werden (z.B. die Platzierung eines Dinosauriers mit Zusatzinformationen). Die POIs können insbesondere kontrastreich gefärbt sein.

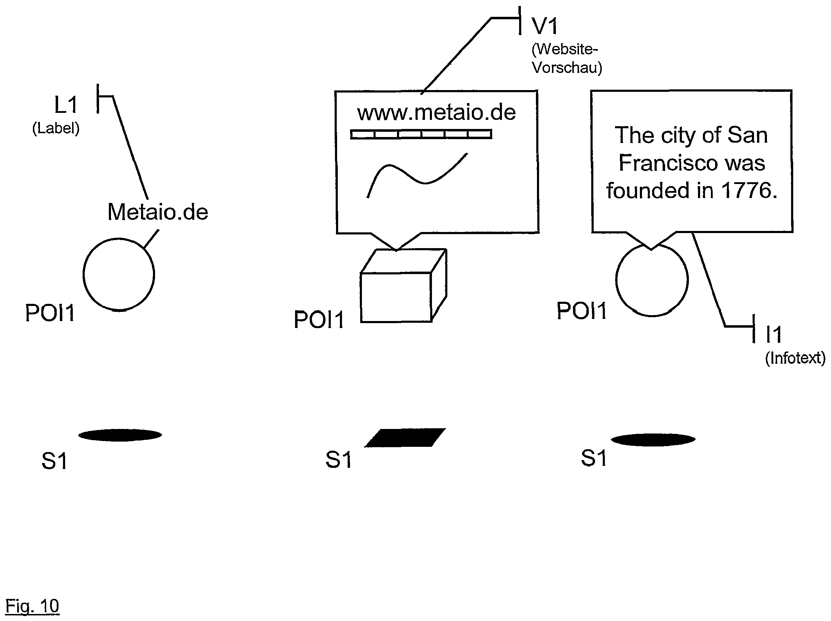

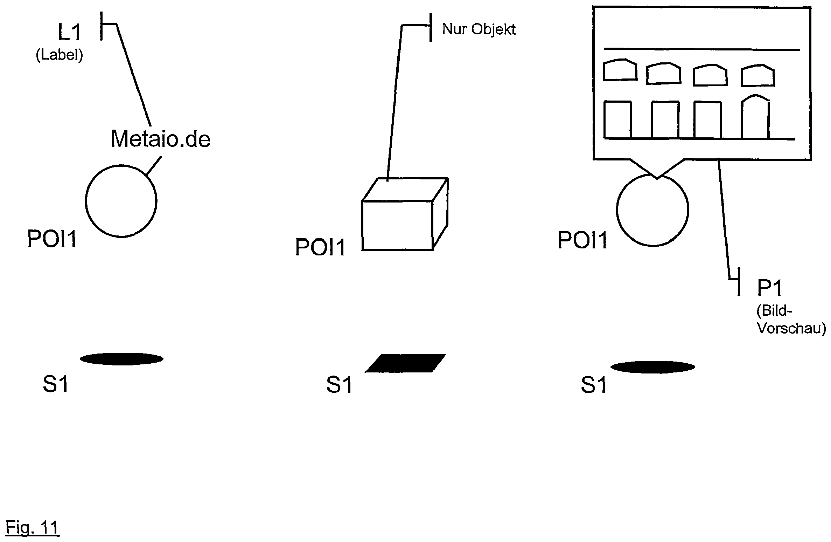

Wie Figur 10 und 11 zeigen, können POIs mit zusätzlichen Informationen versehen werden, die unterschiedlich detailliert sind (im folgenden anhand von POI1 beispielhaft gezeigt). Die niedrigste Detailstufe ist nur das POI. Als nächste Stufe können Labels (vgl. Label L1) angezeigt werden (Fig. 10 links), die beispielsweise einen Beschreibungstext zum assoziierten POI-Objekt anzeigen. Die nächste Stufe ist der sogenannte Preview (Vorschau, vgl. V1 oder Bild P1 in Fig. 11) (z.B. ein Bild oder ein Rendering der Website oder ein Infotext). Manche POI-Objekte können dann in einer nächsten Stufe noch genauer betrachtet werden (vgl. Information I1). Dies kann auch die Aktivierung eines eigenen Programms des Betriebssystems auslösen, wie zum Beispiel das Starten eines Internetbrowsers oder eines Mediaplayers. Je nach Konfiguration oder nach automatisch auswertbaren Kriterien, wie der Auflösung des Displays, können die POIs gleichzeitig mit ihren Zusatzinformationen angezeigt werden oder nur durch Aktivierung. Es kann vorteilhafterweise auch festgestellt werden, welches POI-Objekt am nächsten liegt und nur die vordersten POI-Objekte zeigen ab einer bestimmten Entfernung erst Labels, beim Näherkommen automatisch Previews an.

Die Anzeige kann alternativ auch durch sogenanntes Eye-Tracking gesteuert werden. Die POIs, welche der Nutzer betrachtet, werden mit Zusatzinformationen angezeigt. Die Zusatzinformationen können vorteilhafterweise unbeweglich in der Ansicht verankert sein und mittels einer dynamischen Verbindung mit der beweglichen POI-Repräsentation verbunden sein. Dies erhöht die Lesbarkeit der Information. Der Einsatz von Eye-Tracking zur Aktivierung von Zusatzinformationen über ein POI in AR kann auch unabhängig von dem Verfahren nach Anspruch 1 eingesetzt werden.

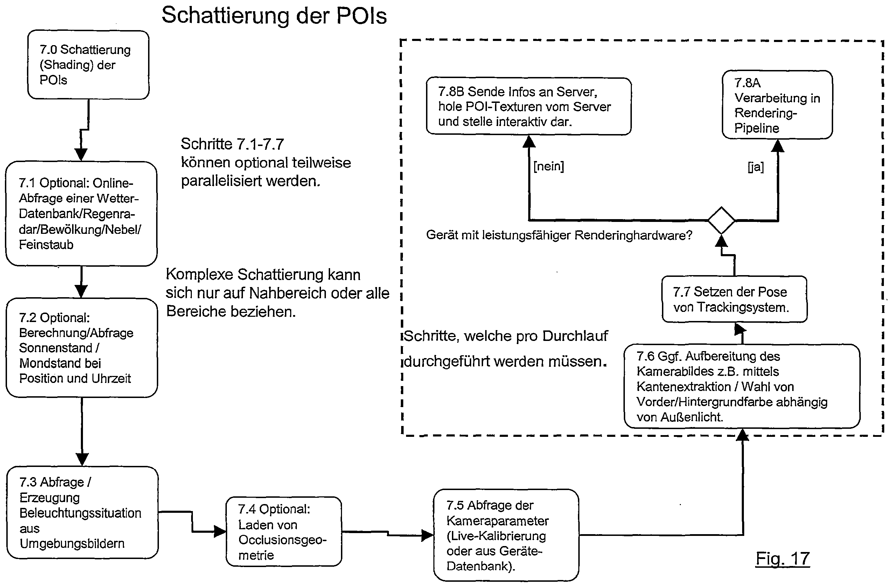

Um die Zuordnung der POI-Objekte zu realen Orten zu verbessern, sind verschiedene erfindungsgemäße Verfahrensschritte kombinierbar, wie in Figur 17 dargestellt wird. Die folgenden Verfahrensschritte können grundsätzlich auch unabhängig von der bisher beschriebenen Idee ausgeführt werden, die Ansicht der realen Umgebung in mehrere Bereiche (wie Nah-, Fern- und Standort-Bereich) zu unterteilen und die eingeblendete virtuelle Information abhängig vom jeweiligen Bereich unterschiedlich darzustellen, wie vorstehend beschrieben.

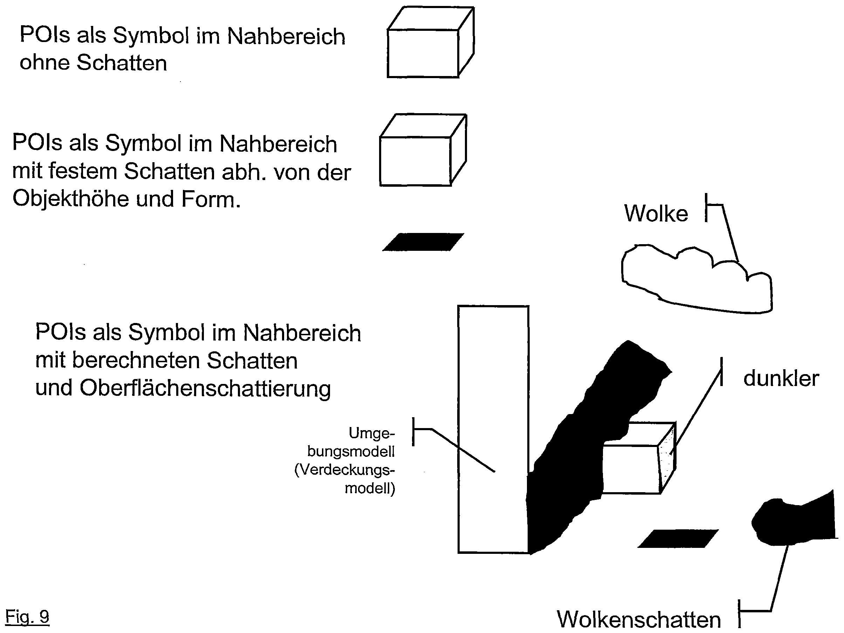

Grundsätzlich findet (insbesondere im Nahbereich 3, wenn eine Bereichsunterteilung erfolgt) ein perspektivisch korrektes 3D-Rendering des POI-Objekts statt. Die Standard-POI-Objekte haben desweiteren eine feste Größe, um die Entfernung zu ihnen kontinuierlich einschätzen zu können. Um den Realitätsgrad zu erhöhen und damit die Zuordnung zu verbessern, können vorteilhafterweise Wetterdaten online abgefragt werden. Hier sind zur Verarbeitung unterschiedliche Komplexitätsgrade vorstellbar. So können auf Basis der Wetterlage (zum Beispiel entsprechend des Google-Wetterdienstes "meistens bewölkt", "vereinzelt stürmisch", "vereinzelt Regen", etc.) feste Beleuchtungsmodelle oder Materialien vergeben werden (z.B. Texturen), welche der Wetterlage angepasst sind. Man könnte im höchsten Komplexitätsgrad jedoch auch ein aktuelles Wolken- oder Regensatelliten- oder Radarbild verwenden, um dynamisch ein angenähertes Modell der Wolkendecke zu erstellen und die Schattenwürfe und optional die detaillierten Lichtverhältnisse daraus berechnen (siehe auch Figur 9). Wie bereits erwähnt, kann dies durch einen Server durchgeführt werden, welcher die Daten dem Client ortsspezifisch zur Verfügung stellt. Ebenfalls hilfreich für die Wahrnehmung der Entfernung ist die Ermittlung der Sichtweite durch Nebel, Regen oder Dunst. Diese kann automatisch erfolgen (vgl. "From video image e.g. (Automatic Fog Detection and Estimation of Visibility Distance through use of an Onboard Camera)", Zeitschrift Machine Vision and Applications Verlag Springer Berlin/Heidelberg ISSN 0932-8092 (Print) 1432-1769 (Online) Heft Volume 17, Number 1 / April 2006, Seiten 8-20) oder ebenfalls mittels aktueller Wetterdaten abgefragt werden.

Einfachste technische Umsetzung, neben weiteren bekannten, ist das Setzten der Nebel-Einstellungen in OpenGL. Insbesondere für den Einsatz der Sichtweite zur realitätsgetreuen Darstellung der Entfernung, kann auch ein Teil eines virtuellen Objektes durch Nebel verändert werden, während ein anderer Teil klar dargestellt wird. Dies soll verhindern, dass zum Beispiel beim Einsatz der Technologie in einem Fahrzeug wichtige POI-Informationen durch Nebel ganz verschwinden. Technisch ist dies zum Beispiel durch einen zweiten Renderdurchgang realisierbar, der nur bestimmte Materialien berücksichtigt, aber keinen Nebel darstellt. Wie in Schritt 7.2 der Figur 17 beschrieben, kann zusätzlich noch auf Grund der Position, des Datums und der Uhrzeit der Stand der Sonne, bzw. des Mondes berechnet werden und zur Einstellung der Lichtquellen gesetzt werden. Dies wirkt sich insbesondere auf die Schatten (vgl. Schatten S1-S4 für die POI1-POI4 in Fig. 4, 10 und 11) aus, die dem Menschen helfen, die Position des POI besser zu bestimmen. Die Schatten können vorberechnete Texturen sein (vorteilhafterweise mit einem Transparenzwert), die sich, je nach Stand der Sonne oder des Mondes, unterhalb des POI auf der Bodenebene befinden, wo die Gerade zwischen Sonne oder Mond und POI die Bodenebene schneidet (Ausnahmen, falls dies nicht der Fall ist). Sollten Sonne oder Mond gleichzeitig sichtbar sein, wird die Sonne zur Berechnung verwendet.

Die Schatten können aber auch, wie nach dem Stand der Technik bekannt, dynamisch berechnet werden. Dies kann vorteilhafterweise das gegenseitige Beschatten von POIs beinhalten. Existiert ein 3D-Modell der Umgebung (siehe auch Schritt 7.4 in Fig. 17, z.B. in Form eines Modells zur Verdeckung eines realen Objekts; sogenannte "Occlusiongeometrie") kann dies zusätzlich zur realistischen Berechnung der Schattensituation eingesetzt werden, indem es zum Beispiel Schatten auf POIs wirft (siehe auch Figur 9). In Schritt 7.3 kann der Realitätsgrad der Einblendung zusätzlich erhöht werden, indem die Materialien durch Bilder der Umgebung des POI angereichert werden. Der Einsatz von sogenannten Environment-Maps (Umgebungskarten) ist dem Fachmann bekannt. Neu ist, dass diese dynamisch ortsbezogen zum Beispiel aus Google Streetview extrahiert werden und berücksichtigt werden.

In Schritt 7.4 wird ein weiterer Schritt unternommen, um die Tiefenwahmehmung des Betrachters zu stärken. Durch das Laden von Verdeckungsmodellen (sogenannte "Occlusiongeometrie") kann festgestellt werden, ob ein POI für den Betrachter sichtbar ist, oder zum Beispiel hinter einem anderen Gebäude verschwindet. POIs können, wenn sie verdeckt sind, direkt in den Fernbereich 4 geschoben werden oder besonders gekennzeichnet werden. Zum Beispiel kann der verdeckte Teil halbtransparent, mit gestrichelten Linien oder andersfarbig dargestellt werden. Vorteilhafterweise werden auch die Schatten nicht berechnet und angezeigt. Das Tiefenmodell kann hinterlegt werden oder dynamisch mittels SLAM-Algorithmen, Stereokameras oder einer Time Of Flight-Kamera erzeugt werden. In diesem Fall ist eine Tiefeninformation pro Bildpixel ausreichend. In Schritt 7.5 werden für eine korrekte Überlagerung im Nahbereich die Kameraparameter generiert (dies muss nicht ständig erfolgen). Diese können dynamisch zum Beispiel mittels eines SLAM-Mechanismus erzeugt werden oder entsprechend des Gerätenamens vom Server abgerufen werden oder im Programm hinterlegt sein. Im Falle eines See-Through-HMDs oder HUDs werden hier die Ergebnisse der See-Through-Kalibrierung oder einer dynamischen Vermessung der Position des Auges zum Display verwendet.

In Schritt 7.6 kann vorteilhafterweise das Kamerabild so aufbereitet werden, dass nur die wichtigsten Bildbestandteile kontrastreich dargestellt werden. Dies macht nur im Video-See-Through-Modus Sinn und sollte den Nutzern, insbesondere bei sehr hellem Umgebungslicht, dabei helfen, die Zuordnung herzustellen. Die Überarbeitung des Videobildes kann zum Beispiel mittels des Sobel-Operators zur Kantenextraktion erfolgen. Vorteilhafterweise kann dieser Modus bei hellem Außenlicht ein- und ausgeschaltet werden, zum Beispiel wenn das Gerät einen Helligkeitssensor enthält. Im Schritt 7.7 werden dem Rendering-System nun zusätzlich auch die Parameter der Pose zur Verfügung gestellt, wenn dies nicht bereits für die Berechnungen in Schritten 3 bis 6 der Figur 12 nötig war. Nun kann, abhängig von den Hardwarefähigkeiten des Systems in Schritt 7.8 alles dargestellt und gerechnet werden. Ist die Hardware des Systems schwach, kann die Berechnung der korrekten Materialoberflächen auch auf Serverseite erfolgen (Schritt 7.8B) oder das Gesamtbild auf Serverseite berechnet werden. Bei einem starken System, kann eine moderne GPU (Graphic Processor Unit) einen großen Teil der Arbeit übernehmen (Schritt 7.8A). Hierzu sind dem Fachmann vielerlei Möglichkeiten bekannt.

### AGGREGATION VON POIs

Zu einem Zeitpunkt im Ablauf (Figur 12), vorteilhafterweise vor Schritt 4.0 oder nach Schritt 5.0, können POIs auch zusammengefasst werden, wie in Figur 16, links unten dargestellt. Die Punkte eines Clusters bilden einen neuen, anders geformten POI. Dies kann im Nahbereich 3, im Standortbereich 5 und im Fernbereich 4 individuell erfolgen oder bereits vor der Aufteilung geschehen. Vorteilhafterweise kann dies nur mit POIs einer Kategorie (z.B. nur Websites) geschehen. Vorteilhafterweise können POIs im vordersten Bereich von diesem Prozess ausgeschlossen werden.

### INTERAKTION MIT POIs

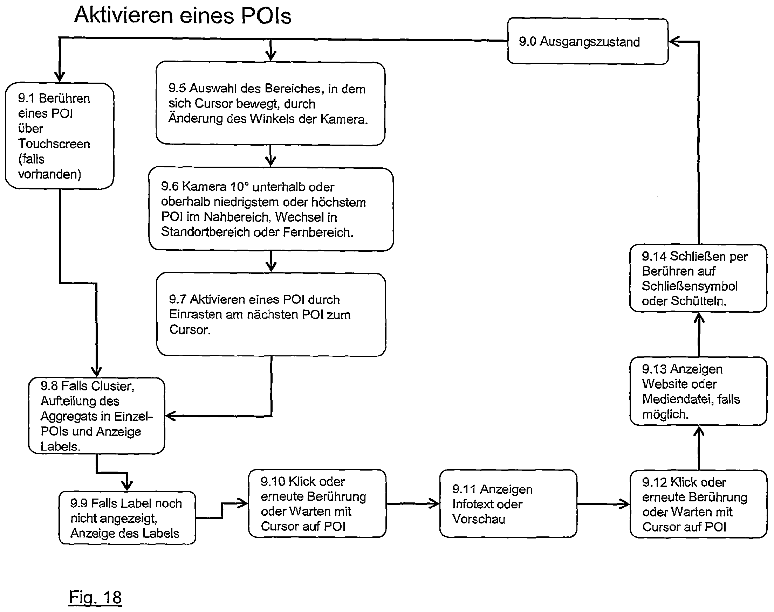

Figur 18 zeigt mögliche Interaktionsmöglichkeiten mit POIs gemäß Aspekten des erfindungsgemäßen Verfahrens. Wie in Augmented Reality üblich, kann der Nutzer durch Wechseln seines Standortes oder der Blickrichtung bereits den Ausschnitt auf die virtuellen Informationen und die Realität verändern. Dies kann auch automatische Interaktion auslösen, wie in "Darstellung der Objekte" bereits beschrieben. Ist das Gerät mit einem Touchscreen oder einer Art Mauskontrolle (z.B. ein Trackball) ausgerüstet, besteht grundsätzlich die Möglichkeit POIs direkt anzuwählen. Sind mehrere POIs zu einem größeren POI-Objekt zusammengefasst worden, werden die einzelnen POIs nun auswählbar angeordnet und die Labels werden angezeigt (Schritt 9.8). Sonst wird, falls noch nicht angezeigt, das Label angezeigt (Schritt 9.9). Durch erneute Aktivierung des POI (Schritt 9.1 oder Tastendruck) wird der Infotext oder Preview angezeigt, falls er nicht bereits angezeigt wird (Schritt 9.11). Erneute Aktivierung löst bei POIs, die entsprechende Informationen hinterlegt haben, die Detailanzeige, Schritt 9.13, aus (z.B. Abspielen eines Films, Musik oder Anzeigen einer Website). Durch Berühren des Schließen-Buttons oder vorteilhafterweise durch Schütteln des Gerätes und Registrierung durch Bewegungssensoren kann diese Anzeige geschlossen werden. Alternativ könnte man diese eventuell auch im Hintergrund laufen lassen. Optionalerweise kann der Nutzer auch einstellen, dass die nächste hinterlegte Audio- oder Videodatei in der Nähe ausgeführt wird und im Hintergrund läuft.

Anstatt direkter Auswahl durch Berührung kann auch mittels des in Figur 7 dargestellten Zielkreuzes 7 (optional) die Interaktion durchgeführt werden, wie in Figur 18 in den Schritten 9.5-9.7 beschrieben. Richtet der Benutzer das Fadenkreuz 7 (oder ein ähnliches Zielobjekt) in der Kamera auf ein POI, wird dort die nächste Detailstufe aktiviert (Label, falls nur POI sichtbar, Preview, falls Label sichtbar). Vorteilhafterweise kann das System auch den auf der Benutzeroberfläche nächstgelegenen POI zum Fadenkreuz aktivieren. Durch längeres Zielen auf einen POI oder Drücken eines Knopfes kann die nächste Detailstufe aktiviert werden. Um in den Fernbereich 4 zu gelangen, richtet der Nutzer die Kamera nach oben, bis er den höchstgelegenen POI im Nahbereich 3 um einen Schwellwert (z.B. 10 Grad) überschritten hat. Dort kann er dann durch Rechts- und Linksdrehen zwischen den POIs navigieren. Ähnlich kann er durch Richten der Kamera nach unten in den Standort-bereich 5 gelangen. Hier kann er dann ebenfalls durch Rechts- und Linksdrehen durch die ansonsten feststehenden POIs navigieren. Besonderheit im Standortbereich 5 ist, dass ein POI, falls angegeben oder automatisch erstellbar, dort zusätzlich zur POI-Detailinformation ein Bild des Ortes angegeben wird, um das Auffinden zu erleichtern (vgl. Vorschau V23 und Bild P23 für den POI23 in Figur 6). Das Bild kann manuell eingepflegt werden oder mittels einer Bilddatenbank, welche PoseInformationen enthält, automatisch erstellt werden.

Die Auswahl eines POI kann optional auch mittels Sprachsteuerung erfolgen. Dafür aktiviert der Nutzer die Steuerung über einen bestimmten Satz (z.B. "aktiviere Sprachsteuerung"). Daraufhin wird jeder POI mit einer Zahl gekennzeichnet. Durch Aussprechen der Zahl kann dieser POI dann aktiviert werden.

Vorteilhafterweise kann man bei dem System durch noch weiteres Richten nach unten einen Kartenmodus aktivieren. Vorteilhafterweise wird beim Wechsel des POI oder bei Auslösen einer Interaktion sofort ein akustisches Signal ausgelöst. Desweiteren kann auch ein haptisches Signal (zum Beispiel ein leichtes Vibrieren) erfolgen.

Vorteilhafterweise kann bei einer speziellen Interaktion mit einem POI (z.B. dreimal Klicken innerhalb kurzer Zeit) ein Kartenmodus geöffnet werden, der die Karte an der Stelle des POI zentriert. Alternativ kann durch eine besondere Interaktion eine Navigation zu diesem POI gestartet werden.

Weiterhin beinhaltet die Erfindung noch die folgenden Aspekte und Ausführungsformen, die in Verbindung mit dem bisher Beschriebenem angewandt werden können:
Die virtuelle Information (z.B. POIs) kann in die Ansicht der realen Umgebung in dem Fernbereich 4 in einheitlicher Größe eingeblendet werden. Hinsichtlich der Art der Einblendung in die Ansicht der realen Umgebung in dem Standort-Bereich 5 wird die virtuelle Information anders dargestellt als bei Einblendung in den Nahbereich 3. Insbesondere kann die virtuelle Information in die Ansicht der realen Umgebung in dem Standort-Bereich 5 unbeweglich, insbesondere auch in einheitlicher Größe und/oder unabhängig von der Orientierung der Darstellungsvorrichtung, eingeblendet werden.

Es können auch mehrere unterschiedliche virtuelle Informationen zu einem virtuellen Objekt zusammengefasst werden und das virtuelle Objekt statt der mehreren virtuellen Informationen in der Ansicht dargestellt werden. Hierbei können die mehreren virtuellen Informationen aus einer Gruppe von virtuellen Informationen ausgewählt werden, die zusammen einen Cluster bilden, wobei das virtuelle Objekt im Vergleich zu den virtuellen Informationen anders geformt ist.

Weiterhin kann auf die Darstellungsvorrichtung eine geographische Karte und/oder eine Vogelperspektiven-Ansicht eingeblendet werden, wenn die Darstellungsvorrichtung näherungsweise waagrecht zur Erdoberfläche gehalten wird oder mehr als ein bestimmter Winkel unterhalb des niedrigsten POIs im Nahbereich gehalten wird oder, wenn diese Funktion schon zum Erreichen des Standortbereichs belegt ist, weiter unterhalb gehalten wird.

Eine jeweilige Begrenzung, insbesondere deren Radius, zwischen den Bereichen kann geändert werden, wenn virtuelle Information vom Benutzer von einem der Bereiche, z.B. dem Nahbereich, in einen anderen der Bereiche, z.B. den Fernbereich, und/oder umgekehrt transferiert wird.

Die Begrenzung, insbesondere deren Radius, kann auch in Abhängigkeit der Anzahl von mehreren virtuellen Informationen innerhalb eines bestimmten Sektors der Ansicht berechnet werden. Die Begrenzung, insbesondere deren Radius, kann auch in Abhängigkeit der zweidimensionalen Dichte von mehreren virtuellen Informationen innerhalb eines bestimmten Sektors der Ansicht berechnet werden. Weiterhin kann die Begrenzung, insbesondere deren Radius, auch in Abhängigkeit von mehreren virtuellen Informationen, die zusammen einen Cluster bilden, berechnet werden.

Im Nahbereich kann in der Darstellungsvorrichtung unterhalb der virtuellen Information ein Schatten in der Nähe einer in der Darstellungsvorrichtung dargestellten Bodenebene dargestellt werden, welcher mit der Position der virtuellen Information korrespondiert.

Als Darstellungsvorrichtung kann eine Video-Darstellungsvorrichtung verwendet werden, in der die Ansicht der realen Umgebung durch ein Kantenbild angereichert wird oder ersetzt wird, um den Kontrast zu verstärken.

Dem Benutzer kann bei einer Benutzer-Aktion zur Auswahl von virtueller Information oder zum Wechsel zwischen mehreren virtuellen Informationen eine akustische und/oder eine haptische Rückkopplung in einer zur Auswahl verwendeten Eingabevorrichtung gegeben werden.

Durch das Ermitteln der Position und Orientierung des wenigstens einen Teils des Systemaufbaus 20 bzw. 30 relativ zu der realen Umgebung kann eine Tiefeninformation in Bezug auf wenigstens ein in der Ansicht enthaltenes reales Objekt berechnet oder geladen werden, wobei die Tiefeninformation verwendet werden kann, um ein Verdeckungsmodell zur Verdeckung eines realen Objekts in die Darstellungsvorrichtung einzublenden, wenn eine virtuelle Information von dem zu verdeckenden realen Objekt in der Ansicht verdeckt wird. Eine solche Tiefeninformation kann auch verwendet werden, um eine Begrenzung zwischen Bereichen, z.B. zwischen Nahbereich und Fernbereich, zu berechnen.

Weiterhin kann mehreren in der Darstellungsvorrichtung eingeblendeten virtuellen Informationen eine jeweilige Nummer zugeordnet werden, wobei durch Spracherkennung der Nummer oder Auswahl der Nummer auf einer Tastatur oder einem berührungsempfindlichen Eingabefeld die entsprechende virtuelle Information auswählbar ist.

Außerdem können mehrere virtuelle Informationen jeweils einer von mehreren Kategorien zugeordnet werden, wobei die virtuellen Informationen in Abhängigkeit der Kategorie ein- und/oder ausgeblendet werden können.

Auch kann in der Darstellungsvorrichtung ein Rand 6 dargestellt werden, der eine Reichweite des Nahbereichs 3 anzeigt, wobei eine Begrenzung des Nahbereichs durch eine Benutzer-Aktion, insbesondere durch ein Ziehen der Begrenzung, veränderbar ist.

Beispielsweise ist die virtuelle Information in wenigstens drei Stufen darstellbar. Hierbei weist eine erste Stufe einen Körper (z.B. einen 2D-Körper oder 3D-Körper)) als lediglich örtlicher Hinweis auf die virtuelle Information auf (vgl.. POI1 in Fig. 10, 11), eine zweite Stufe weist einen Hinweis auf die virtuelle Information in Form eines beschrifteten Labels auf (vgl. Label L1 in Fig. 11), und eine dritte Stufe weist eine auszugsartige Vorschau auf die virtuelle Information auf (vgl. Vorschau V1 und Bild P1 in Figuren 10, 11), die insbesondere dann eingeblendet wird, wenn durch eine Benutzer-Aktion die punktartige Darstellung oder das Label ausgewählt wird. Ein vierte Stufe kann die Information in voller Länge darstellen (vgl. Information I1 aus Fig. 10).

Eine Ausprägung kann dabei vorsehen, dass in einem ersten Teil des Fernbereichs 4 virtuelle Information lediglich in der ersten Stufe dargestellt wird, in einem zweiten Teil des Fernbereichs 4 mit näher als im ersten Teil des Fernbereichs an der Darstellungsvorrichtung platzierten realen Objekten und in einem ersten Teil des Nahbereichs 3 virtuelle Information in der zweiten Stufe dargestellt wird, und in einem zweiten Teil des Nahbereichs 3 mit näher als im ersten Teil des Nahbereichs an der Darstellungsvorrichtung platzierten realen Objekten die virtuelle Information in der dritten Stufe dargestellt wird.

Weiterhin kann vorgesehen sein, dass eine Begrenzung zwischen Nahbereich und Fernbereich, insbesondere ein Radius der Begrenzung, abhängig von einer Größe der eingeblendeten virtuellen Information, einer Auflösung der Darstellungsvorrichtung und/oder einer Auflösung einer Kamera, die zur Generierung der Ansicht verwendet wird, berechnet wird.

Weiterhin kann die Grenze des Standortbereiches mit einer erhöhten Messunsicherheit der Positionserfassung größer werden.

Weiterhin kann die Begrenzung, die insbesondere ein Radius sein kann und bestimmt, welche Objekte überhaupt angezeigt werden sollen, von der aktuellen Geschwindigkeit oder der Durchschnittsgeschwindigkeit des Benutzers oder der Entfernung, welche der Benutzer mit öffentlichen Verkehrsmitteln, Fahrzeug oder Fahrrad oder ähnlichem in einer bestimmten Zeit erreichen kann, abhängen.

Weiterhin kann unabhängig von den anderen Offenbarungen das System virtuelle Informationen mit der Realität überlagern, wobei bei der Einblendung von virtueller Information in eine Ansicht einer realen Umgebung Wetterdaten berücksichtigt werden, die z.B. über das Internet ("online") abgefragt werden, um den Realitätsgrad von eingeblendeter virtueller Information in Bezug auf die reale Umgebung zu erhöhen und damit die Zuordnung zu verbessern. Die oben in Verbindung mit Wetterdaten und ähnlichem beschriebenen Merkmale und Ausführungsformen können auch in Verbindung mit diesem Aspekt unabhängig von anderen beschriebenen Aspekten angewandt werden.

### Weitere Ausführungsformen

1. Verfahren zum Darstellen von virtueller Information in einer realen Umgebung, aufweisend die folgenden Schritte:
   - Bereitstellen wenigstens einer Ansicht (1) einer realen Umgebung (40) und eines Systemaufbaus (20, 30) zum Einblenden von virtueller Information (POI) zur Überlagerung mit der realen Umgebung in wenigstens einem Teil der Ansicht, wobei der Systemaufbau wenigstens eine Darstellungsvorrichtung (21, 31) aufweist,
   - Ermitteln einer Position und Orientierung wenigstens eines Teils des Systemaufbaus (20, 30) relativ zu wenigstens einem Bestandteil der realen Umgebung (40),
   - Unterteilung von wenigstens einem Teil der Ansicht (1) der realen Umgebung in mehrere Bereiche umfassend einen ersten Bereich (3) und einen zweiten Bereich (4), wobei Objekte der realen Umgebung (40) innerhalb des ersten Bereichs (3) näher an dem Systemaufbau (20,30) platziert sind als Objekte der realen Umgebung (40) innerhalb des zweiten Bereichs (4),
   - Einblenden von wenigstens einer virtuellen Information (POI) auf die Darstellungsvorrichtung (21,31) in wenigstens einem Teil der Ansicht (1) der realen Umgebung unter Berücksichtigung der Position und Orientierung des wenigstens eines Teils des Systemaufbaus (20,30),
   - wobei die virtuelle Information (POI) hinsichtlich der Art der Einblendung in die Ansicht (1) der realen Umgebung in dem ersten Bereich (3) anders dargestellt wird als in dem zweiten Bereich (4).
2. Verfahren nach Ausführungsform 1, wobei die wenigstens eine virtuelle Information (POI) in die Ansicht der realen Umgebung in dem ersten Bereich (3) perspektivisch richtig entsprechend der Position und Orientierung der Darstellungsvorrichtung (21, 31) relativ zur realen Umgebung eingeblendet wird, insbesondere in verschiedener Größe abhängig von der perspektivischen Positionierung der virtuellen Information in der Ansicht.
3. Verfahren nach Ausführungsform 1 oder 2, wobei die wenigstens eine virtuelle Information (POI) in die Ansicht der realen Umgebung in dem zweiten Bereich (4) in einheitlicher Größe eingeblendet wird.
4. Verfahren nach einer der Ausführungsformen 1 bis 3, wobei die mehreren Bereiche, in welche der wenigstens eine Teil der Ansicht der realen Umgebung unterteilt wird, neben dem ersten Bereich (3) und dem zweiten Bereich (4) einen dritten Bereich (5) umfassen, innerhalb dessen Objekte der realen Umgebung näher an dem Systemaufbau (20,30) platziert sind als Objekte der realen Umgebung innerhalb des ersten Bereichs (3), und wobei die wenigstens eine virtuelle Information (POI) hinsichtlich der Art der Einblendung in die Ansicht (1) der realen Umgebung in dem dritten Bereich (5) anders dargestellt wird als in dem ersten Bereich (3).
5. Verfahren nach Ausführungsform 4, wobei die wenigstens eine virtuelle Information (POI) in die Ansicht (1) der realen Umgebung in dem Standortbereich (5) unbeweglich, insbesondere auch in einheitlicher Größe und/oder unabhängig von der Orientierung der Darstellungsvorrichtung (21,31), eingeblendet wird.
6. Verfahren nach einer der vorhergehenden Ausführungsformen, bei dem mehrere unterschiedliche virtuelle Informationen (POI) zu einem virtuellen Objekt (POI_C) zusammengefasst werden und das virtuelle Objekt statt der mehreren virtuellen Informationen in der Ansicht (1) dargestellt wird.
7. Verfahren nach Ausführungsform 6, wobei die mehreren virtuellen Informationen (POI) aus einer Gruppe von virtuellen Informationen ausgewählt werden, die zusammen einen Cluster (C1) bilden, wobei das virtuelle Objekt (POI_C) im Vergleich zu den virtuellen Informationen (POI) anders geformt ist.
8. Verfahren nach einer der vorhergehenden Ausführungsformen, bei dem auf die Darstellungsvorrichtung (21,31) eine geographische Karte und/oder eine Vogelperspektiven-Ansicht eingeblendet wird, wenn die Darstellungsvorrichtung mehr als einen bestimmten Winkel unterhalb eines der Bereiche (3,5) oder einer unten dargestellten virtuellen Information (POI) in einem der Bereiche geneigt ist.
9. Verfahren nach einer der vorhergehenden Ausführungsformen, bei dem die wenigstens eine virtuelle Information (POI) von einem der Bereiche (3,4,5) in einen anderen der Bereiche (3,4,5) transferierbar ist, indem die virtuelle Information vom Benutzer ausgewählt und durch eine Transferaktion, insbesondere durch Ziehen der virtuellen Information, transferiert wird.
10. Verfahren nach einer der vorhergehenden Ausführungsformen, wobei der erste Bereich (3) von dem zweiten Bereich (4) durch eine Begrenzung (Radius 1) getrennt ist, die insbesondere einen Radius in Richtung eines Blickwinkels der Darstellungsvorrichtung (21,31) aufweist, wobei die Begrenzung, insbesondere deren Radius, dynamisch berechnet wird.
11. Verfahren nach Ausführungsform 10, wobei die Begrenzung (Radius 1), insbesondere deren Radius, geändert wird, wenn virtuelle Information (POI) vom Benutzer von einem der Bereiche (3,4,5) in einen anderen der Bereiche (3,4,5) transferiert wird.
12. Verfahren nach Ausführungsformen 10 oder 11, wobei die Begrenzung (Radius 1), insbesondere deren Radius, in Abhängigkeit der Anzahl von mehreren virtu ellen Informationen (POI) innerhalb eines bestimmten Sektors der Ansicht berechnet wird.
13. Verfahren nach einer der Ausführungsformen 10 bis 12, wobei die Begrenzung (Radius 1), insbesondere deren Radius, in Abhängigkeit der zweidimensionalen Dichte von mehreren virtuellen Informationen (POI) innerhalb eines bestimmten Sektors der Ansicht berechnet wird.
14. Verfahren nach einer der Ausführungsformen 10 bis 13, wobei die Begrenzung (Radius 1), insbesondere deren Radius, in Abhängigkeit von mehreren virtuellen Informationen (POI), die zusammen einen Cluster (C1) bilden, berechnet wird.
15. Verfahren nach einer der vorhergehenden Ausführungsformen, wobei im ersten Bereich (3) in der Darstellungsvorrichtung (21,31) unterhalb der wenigstens einen virtuellen Information (POI) ein Schatten (S1-S4) in der Nähe einer in der Darstellungsvorrichtung dargestellten Bodenebene dargestellt wird, welcher mit der Position der virtuellen Information korrespondiert.
16. Verfahren nach einer der vorhergehenden Ausführungsformen, wobei als Darstellungsvorrichtung (21,31) eine Video-Darstellungsvorrichtung verwendet wird, in der die Ansicht (1) der realen Umgebung durch ein Kantenbild angereichert wird oder ersetzt wird, um den Kontrast zu verstärken.
17. Verfahren nach einer der vorhergehenden Ausführungsformen, wobei bei einer Benutzer-Aktion zur Auswahl von virtueller Information (POI) oder zum Wechsel zwischen mehreren virtuellen Informationen (POI) dem Benutzer eine akustische und/oder eine haptische Rückkopplung in einer zur Auswahl verwendeten Eingabevorrichtung gegeben wird.
18. Verfahren nach einer der vorhergehenden Ausführungsformen, wobei durch das Ermitteln der Position und Orientierung des wenigstens einen Teils des Systemaufbaus (20,30) relativ zu dem wenigstens einen Bestandteil der realen Umgebung (40) eine Tiefeninformation in Bezug auf wenigstens ein in der Ansicht enthaltenes reales Objekt berechnet oder geladen wird, wobei die Tiefeninformation verwendet wird, um ein Verdeckungsmodell zur Verdeckung eines realen Objekts in die Darstellungsvorrichtung (21,31) einzublenden, wenn eine virtuelle Information von dem zu verdeckenden realen Objekt in der Ansicht verdeckt wird.
19. Verfahren nach einer der vorhergehenden Ausführungsformen, wobei durch das Ermitteln der Position und Orientierung des wenigstens eines Teils des Systemaufbaus (20,30) relativ zu dem wenigstens einen Bestandteil der realen Umgebung (40) eine Tiefeninformation in Bezug auf wenigstens ein in der Ansicht enthaltenes reales Objekt berechnet oder geladen wird, wobei die Tiefeninformation verwendet wird, um eine Begrenzung (Radius 1) zwischen erstem Bereich (3) und zweitem Bereich (4) zu berechnen.
20. Verfahren nach einer der vorhergehenden Ausführungsformen, wobei mehreren eingeblendeten virtuellen Informationen (POI) eine jeweilige Nummer zugeordnet wird, und durch Spracherkennung der Nummer oder Auswahl der Nummer auf einer Tastatur oder einem berührungsempfindlichen Eingabefeld die entsprechende virtuelle Information auswählbar ist.
21. Verfahren nach einer der vorhergehenden Ausführungsformen, wobei in der Darstellungsvorrichtung (21,31) ein Rand (6) dargestellt wird, der eine Reichweite des ersten Bereichs (3) anzeigt, wobei eine Begrenzung des ersten Bereichs durch eine Benutzer-Aktion, insbesondere durch ein Ziehen der Begrenzung, veränderbar ist.
22. Verfahren nach einer der vorhergehenden Ausführungsformen, wobei die wenigstens eine virtuelle Information (POI) in wenigstens drei Stufen darstellbar ist, wobei eine erste Stufe einen Körper (POI1) als lediglich örtlicher Hinweis auf die virtuelle Information aufweist, eine zweite Stufe einen Hinweis auf die virtuelle Information in Form eines beschrifteten Labels (L1) aufweist und eine dritte Stufe eine auszugsartige Vorschau (V1) auf die virtuelle Information aufweist, die insbesondere dann eingeblendet wird, wenn durch eine Benutzer-Aktion die punktartige Darstellung (POI1) oder das Label (L1) ausgewählt wird.
23. Verfahren nach Ausführungsform 22, wobei in einem ersten Teil des zweiten Bereichs (4) virtuelle Information (POI) lediglich in der ersten Stufe dargestellt wird, in einem zweiten Teil des zweiten Bereichs (4) mit näher als im ersten Teil des zweiten Bereichs an der Darstellungsvorrichtung (21,31) platzierten realen Objekten und in einem ersten Teil des ersten Bereichs (3) virtuelle Information (POI) in der zweiten Stufe dargestellt wird, und in einem zweiten Teil des ersten Bereichs (3) mit näher als im ersten Teil des ersten Bereichs an der Darstellungsvorrichtung (21,31) platzierten realen Objekten die virtuelle Information (POI) in der dritten Stufe dargestellt wird.
24. Verfahren nach einer der vorhergehenden Ausführungsformen, wobei der zweite Bereich (4) oder dritte Bereich (5) aus der Ansicht ausgeblendet wird, wenn keine virtuelle Information (POI) im zweiten Bereich bzw. dritten Bereich dargestellt wird.
25. Verfahren nach einer der vorhergehenden Ausführungsformen, wobei eine Begrenzung (Radius 1) zwischen erstem Bereich (3) und zweitem Bereich (4), insbesondere ein Radius der Begrenzung, abhängig von einer Größe der eingeblendeten virtuellen Infor mation (POI), einer Auflösung der Darstellungsvorrichtung (21,31) und/oder einer Auflösung einer Kamera (22,32), die zur Generierung der Ansicht (1) verwendet wird, berechnet wird.
26. Verfahren nach einer der vorhergehenden Ausführungsformen, wobei dynamische Wetterinformation in Bezug auf die reale Umgebung bei der Einblendung der wenigstens einen virtuellen Information (POI) in die Ansicht der realen Umgebung berücksichtigt wird.
27. Verfahren nach einer der vorhergehenden Ausführungsformen, wobei die wenigstens eine virtuelle Information einen interessanten Punkt (POI) in Bezug auf die reale Umgebung repräsentiert.
28. Verfahren nach einer der vorhergehenden Ausführungsformen, wobei eine Grenze des dritten Bereiches (5) mit einer erhöhten Messunsicherheit einer Positionserfassung größer wird.
29. Verfahren nach einer der vorherigen Ausführungsformen, wobei eine Begrenzung, insbesondere mit einem Radius, die bestimmt, welche virtuelle Information (POI) überhaupt angezeigt werden soll, von der aktuellen Geschwindigkeit oder der Durchschnittsgeschwindigkeit des Benutzers oder der Entfernung, welche der Benutzer mit öffentlichen Verkehrsmitteln, Fahrzeug oder Fahrrad oder ähnlichem in einer bestimmten Zeit erreichen kann, abhängt.
30. Verfahren zur Überlagerung virtueller Informationen mit der Realität, wobei bei der Einblendung von virtueller Information in eine Ansicht einer realen Umgebung Wetterdaten berücksichtigt werden, die insbesondere über das Internet ("online") abgefragt werden, um den Realitätsgrad von eingeblendeter virtueller Information in Bezug auf die reale Umgebung zu erhöhen und damit die Zuordnung zu verbessern.

## Patentansprüche

1. Verfahren zum Darstellen von virtueller Information in einer realen Umgebung, aufweisend die folgenden Schritte:
- Bereitstellen einer Ansicht (1) einer realen Umgebung (40) zur Darstellung an einem Systemaufbau (20, 30), der zumindest eine Anzeigevorrichtung (21, 31) umfasst, wobei der Systemaufbau eine virtuelle Information (POI) mit der realen Umgebung in wenigstens einem Teil der Ansicht überlagert,
- Ermitteln einer Position und Orientierung wenigstens eines Teils des Systemaufbaus (20, 30) relativ zu einer Vielzahl von Bestandteilen der realen Umgebung (40),
- Unterteilung von wenigstens einem Teil der Ansicht (1) der realen Umgebung in mehrere Bereiche umfassend einen ersten Bereich (3) und einen zweiten Bereich (4), wobei Objekte der realen Umgebung (40) innerhalb des ersten Bereichs (3) näher an dem Systemaufbau (20, 30) platziert sind als Objekte der realen Umgebung (40) innerhalb des zweiten Bereichs (4),
- Darstellen, in dem ersten Bereich der Ansicht (1) der realen Umgebung, einer ersten virtuellen Information, die mit einem ersten Bestandteil aus der Vielzahl von Bestandteilen assoziiert ist, wobei die erste virtuelle Information in einer ersten Detailstufe dargestellt wird, wobei die erste Detailstufe mit dem ersten Bereich assoziiert ist; und
- Darstellen, in dem zweiten Bereich der Ansicht (1) der realen Umgebung, einer zweiten virtuellen Information, die mit einem zweiten Bestandteil aus der Vielzahl von Bestandteilen assoziiert ist, wobei die zweite virtuelle Information in einer zweiten Detailstufe dargestellt wird, wobei die zweite Detailstufe mit dem zweiten Bereich assoziiert ist; und
- wobei die erste Detailstufe und die zweite Detailstufe unterschiedliche Arten der Einblendung in die Ansicht (1) der realen Umgebung darstellen,
- wobei der erste Bereich (3) von dem zweiten Bereich (4) durch eine Begrenzung getrennt ist und die Begrenzung durch eine Benutzereingabe an dem Systemaufbau (20, 30) veränderbar ist;
- wobei der erste Bereich (3) und der zweite Bereich (4) auf der Position und Orientierung des wenigstens eines Teils des Systemaufbaus (20, 30) basieren.

2. Verfahren nach Anspruch 1, wobei
die wenigstens eine virtuelle Information (POI) in die Ansicht der realen Umgebung in dem ersten Bereich (3) dreidimensional perspektivisch richtig entsprechend der Position und Orientierung der Darstellungsvorrichtung (21, 31) relativ zur realen Umgebung eingeblendet wird.

3. Verfahren nach Anspruch 1 oder 2, wobei
die zweite virtuelle Information (POI) in die Ansicht der realen Umgebung in dem zweiten Bereich (4) in einheitlicher Größe eingeblendet wird.

4. Verfahren nach einem der Ansprüche 1 bis 3,
wobei die mehreren Bereiche, in welche der wenigstens eine Teil der Ansicht der realen Umgebung unterteilt wird, neben dem ersten Bereich (3) und dem zweiten Bereich (4) einen dritten Bereich (5) umfassen, innerhalb dessen Objekte der realen Umgebung näher an dem Systemaufbau (20, 30) platziert sind als Objekte der realen Umgebung innerhalb des ersten Bereichs (3), und wobei die wenigstens eine virtuelle Information (POI) hinsichtlich der Art der Einblendung in die Ansicht (1) der realen Umgebung in dem dritten Bereich (5) anders dargestellt wird als in dem ersten Bereich (3).

5. Verfahren nach Anspruch 4,
wobei eine dritte virtuelle Information (POI) in die Ansicht (1) der realen Umgebung in dem dritten Bereich (5) unabhängig von der Orientierung der Darstellungsvorrichtung eingeblendet wird.

6. Verfahren nach einem der vorhergehenden Ansprüche,
bei dem mehrere unterschiedliche virtuelle Informationen (POI) zu einem virtuellen Objekt (POI_C) zusammengefasst werden und das virtuelle Objekt statt der mehreren virtuellen Informationen in der Ansicht (1) dargestellt wird.

7. Verfahren nach einem der vorhergehenden Ansprüche,
bei dem eine dritte virtuelle Information (POI) von einem der Bereiche (3, 4, 5) in einen anderen der Bereiche (3, 4, 5) transferierbar ist, indem die virtuelle Information vom Benutzer ausgewählt und durch eine Transferaktion transferiert wird.

8. Verfahren nach einem der vorhergehenden Ansprüche, wobei
die Begrenzung geändert wird, wenn virtuelle Information (POI) vom Benutzer von einem der Bereiche (3, 4, 5) in einen anderen der Bereiche (3, 4, 5) transferiert wird, oder die Begrenzung in Abhängigkeit der Anzahl von mehreren virtuellen Informationen (POI) innerhalb eines bestimmten Sektors der Ansicht berechnet wird, oder die Begrenzung in Abhängigkeit der zweidimensionalen Dichte von mehreren virtuellen Informationen (POI) innerhalb eines bestimmten Sektors der Ansicht berechnet wird, oder die Begrenzung in Abhängigkeit von mehreren virtuellen Informationen (POI), die zusammen einen Cluster (C1) bilden, berechnet wird, oder wobei durch das Ermitteln der Position und Orientierung des wenigstens eines Teils des Systemaufbaus (20, 30) relativ zu dem wenigstens einen Bestandteil der realen Umgebung (40) eine Tiefeninformation in Bezug auf wenigstens ein in der Ansicht enthaltenes reales Objekt berechnet oder geladen wird, wobei die Tiefeninformation verwendet wird, um die Begrenzung zwischen erstem Bereich (3) und zweitem Bereich (4) zu berechnen.

9. Verfahren nach einem der vorhergehenden Ansprüche,
wobei in der Darstellungsvorrichtung (21, 31) ein Rand (6) dargestellt wird, der eine Reichweite des ersten Bereichs (3) anzeigt.

10. Verfahren nach einem der vorhergehenden Ansprüche,
wobei die erste Detailstufe einen Körper (POI1) als lediglich örtlicher Hinweis auf die virtuelle Information aufweist, die zweite Detailstufe einen Hinweis auf die virtuelle Information in Form eines beschrifteten Labels (L1) aufweist und die dritte Detailstufe eine auszugsartige Vorschau (V1) auf die virtuelle Information aufweist.

11. Verfahren nach Anspruch 10, wobei
in einem ersten Teil des zweiten Bereichs (4) virtuelle Information (POI) lediglich in der ersten Detailstufe dargestellt wird, in einem zweiten Teil des zweiten Bereichs (4) mit näher als im ersten Teil des zweiten Bereichs an der Darstellungsvorrichtung (21, 31) platzierten realen Objekten und in einem ersten Teil des ersten Bereichs (3) virtuelle Information (POI) in der zweiten Detailstufe dargestellt wird, und in einem zweiten Teil des ersten Bereichs (3) mit näher als im ersten Teil des ersten Bereichs an der Darstellungsvorrichtung (21, 31) platzierten realen Objekten die virtuelle Information (POI) in der dritten Detailstufe dargestellt wird.

12. Verfahren nach einem der vorhergehenden Ansprüche,
wobei eine Begrenzung zwischen erstem Bereich (3) und zweitem Bereich (4) abhängig von einer Größe der eingeblendeten virtuellen Information (POI), einer Auflösung der Darstellungsvorrichtung (21, 31) und/oder einer Auflösung einer Kamera (22, 32), die zur Generierung der Ansicht (1) verwendet wird, berechnet wird.

13. Verfahren nach einem der vorhergehenden Ansprüche,
wobei dynamische Wetterinformation in Bezug auf die reale Umgebung bei der Einblendung der wenigstens einen virtuellen Information (POI) in die Ansicht der realen Umgebung berücksichtigt wird.

14. Verfahren nach Anspruch 4 oder 5, wobei
eine Grenze zwischen dem ersten Bereich und dem dritten Bereich (5) geändert wird, so dass die Größe des dritten Bereiches (5) mit einer erhöhten Messunsicherheit einer Positionserfassung größer wird.

15. Verfahren nach einem der vorherigen Ansprüche, wobei
eine Begrenzung, die bestimmt, welche virtuelle Information (POI) überhaupt angezeigt werden soll, von der aktuellen Geschwindigkeit oder der Durchschnittsgeschwindigkeit des Benutzers oder der Entfernung, welche der Benutzer mit öffentlichen Verkehrsmitteln, Fahrzeug oder Fahrrad oder ähnlichem in einer bestimmten Zeit erreichen kann, abhängt.
